# EUROPEAN PATENT APPLICATION

(11) **EP 4 020 971 A1**
(43) Date of publication of application: **29.06.2022**
(21) Application number: 19944661.8
(22) Date of filing: 09.09.2019
(51) Int. Cl.: H04N 5/235, H04N 9/04

(54) **IMAGE COLLECTION METHOD, CAMERA ASSEMBLY AND MOBILE TERMINAL**

(71) Applicant: GUANGDONG OPPO MOBILE TELECOMMUNICATIONS CORP., LTD., Dongguan, Guangdong 523860 (CN)
(72) Inventor: TANG, Cheng, Dongguan, Guangdong 523860 (CN); ZHOU, Qiqun, Dongguan, Guangdong 523860 (CN); ZHANG, Gong, Dongguan, Guangdong 523860 (CN)
(74) Representative: Thorniley, Peter
(86) International application number: PCT/CN2019/104974
(87) International publication number: WO 2021/046691

(57) **Abstract**

An image capturing method, a camera assembly (40), and a mobile terminal (90) are provided. An image sensor (10) includes a two-dimensional (2D) pixel array. The 2D pixel array includes multiple panchromatic pixels and multiple color pixels. The 2D pixel array includes minimum repeating units. Each minimal repeating unit includes multiple sub-units. Each sub-unit includes multiple monochromatic pixels and multiple panchromatic pixels. The image capturing method includes the following. (01) The 2D pixel array is controlled to be exposed to obtain a panchromatic original image and a color original image. (02) The color original image is processed to assign all pixels in each sub-unit as a monochromatic large pixel corresponding to a single color in the sub-unit, and a pixel value of the monochromatic large pixel is outputted to obtain a color intermediate image. (03) The panchromatic original image is processed to obtain a panchromatic intermediate image. (04) The color intermediate image and/or the panchromatic intermediate image are processed to obtain a target image.

## Description

### TECHNICAL FIELD

This application relates to the field of imaging technology, and in particular to an image capturing method, a camera assembly, and a mobile terminal.

### BACKGROUND

Mobile terminals such as mobile phones are often equipped with cameras to realize a camera function. The camera is provided with an image sensor. In order to realize capturing of a color image, the image sensor is usually provided with color pixels, and the color pixels are arranged in a Bayer array. In order to improve an imaging quality of the image sensor in a dark environment, white pixels with higher sensitivity than color pixels are introduced into the image sensor in related arts.

### SUMMARY

The present application provides an image capturing method, a camera assembly, and a mobile terminal.

In an aspect, the present application provides an image capturing method for an image sensor. The image sensor includes a two-dimensional (2D) pixel array. The 2D pixel array includes multiple panchromatic pixels and multiple color pixels. The 2D pixel array includes minimal repeating units. Each minimal repeating unit includes multiple sub-units. Each sub-unit includes multiple monochromatic pixels and multiple panchromatic pixels. The image capturing method includes the following. The 2D pixel array is controlled to be exposed to obtain a panchromatic original image and a color original image. The color original image is processed to assign all pixels in each sub-unit as a monochromatic large pixel corresponding to a single color in the sub-unit, and a pixel value of the monochromatic large pixel is outputted to obtain a color intermediate image. The panchromatic original image is processed to obtain a panchromatic intermediate image. The color intermediate image and/or the panchromatic intermediate image are processed to obtain a target image.

In another aspect, the present application further provides a camera assembly. The camera assembly includes an image sensor and a processing chip. The image sensor includes a 2D pixel array. The 2D pixel array includes multiple panchromatic pixels and multiple color pixels. The 2D pixel array includes minimal repeating units. Each minimal repeating unit includes multiple sub-units. Each sub-unit includes multiple monochromatic pixels and multiple panchromatic pixels. The image sensor is configured to be exposed to obtain a panchromatic original image and a color original image. The processing chip is configured to process the color original image to assign pixels in each sub-unit as a monochromatic large pixel corresponding to a single color in the sub-unit, and output a pixel value of the monochromatic large pixel to obtain a color intermediate image; process the panchromatic original image to obtain a panchromatic intermediate image; and process the color intermediate image and/or the panchromatic intermediate image to obtain a target image.

In another aspect, the present application further provides a mobile terminal. The mobile terminal includes an image sensor and a processor. The image sensor includes a 2D pixel array. The 2D pixel array includes multiple panchromatic pixels and multiple color pixels. The 2D pixel array includes minimal repeating units. Each minimal repeating unit includes multiple sub-units. Each sub-unit includes multiple monochromatic pixels and multiple panchromatic pixels. The image sensor is configured to be exposed to obtain a panchromatic original image and a color original image. The processor is configured to process the color original image to assign pixels in each sub-unit as a monochromatic large pixel corresponding to a single color in the sub-unit, and output a pixel value of the monochromatic large pixel to obtain a color intermediate image; process the panchromatic original image to obtain a panchromatic intermediate image; and process the color intermediate image and/or the panchromatic intermediate image to obtain a target image.

The additional aspects and advantages of implementations of the present application will be partly given in the following description, partly become obvious from the following description, or be understood through practice of the present application.

### BRIEF DESCRIPTION OF THE DRAWINGS

The above-mentioned and/or additional aspects and advantages of the present application may become obvious and easy to understand from the description of the implementations in conjunction with the following drawings.
FIG. 1 is a schematic diagram of a camera assembly in implementations of the present application.
FIG. 2 is a schematic diagram of an image sensor in implementations of the present application.
FIG. 3 is a schematic diagram of a connection between a pixel array and exposure control lines in implementations of the present application.
FIG. 4 is a schematic diagram of exposure saturation time of different color channels.
FIG. 5 is a schematic diagram of a pixel circuit in implementations of the present application.
FIG. 6 is a schematic diagram of an arrangement of pixels in a minimal repeating unit in implementations of the present application.
FIG. 7 is a schematic diagram of an arrangement of pixels in another minimal repeating unit in implementations of the present application.
FIG. 8 is a schematic diagram of an arrangement of pixels in another minimal repeating unit in implementations of the present application.
FIG. 9 is a schematic diagram of an arrangement of pixels in another minimal repeating unit in implementations of the present application.
FIG. 10 is a schematic diagram of an arrangement of pixels in another minimal repeating unit in implementations of the present application.
FIG. 11 is a schematic diagram of an arrangement of pixels in another minimal repeating unit in implementations of the present application.
FIG. 12 is a schematic diagram of an arrangement of pixels in another minimal repeating unit in implementations of the present application.
FIG. 13 is a schematic diagram of an arrangement of pixels in another minimal repeating unit in implementations of the present application.
FIG. 14 is a schematic diagram of an arrangement of pixels in another minimal repeating unit in implementations of the present application.
FIG. 15 is a schematic diagram of an arrangement of pixels in another minimal repeating unit in implementations of the present application.
FIG. 16 is a schematic diagram of an arrangement of pixels in another minimal repeating unit in implementations of the present application.
FIG. 17 is a schematic diagram of an arrangement of pixels in another minimal repeating unit in implementations of the present application.
FIG. 18 is a schematic diagram of an arrangement of pixels in another minimal repeating unit in implementations of the present application.
FIG. 19 is a schematic diagram of an arrangement of pixels in another minimal repeating unit in implementations of the present application.
FIG. 20 is a schematic diagram of an arrangement of pixels in another minimal repeating unit in implementations of the present application.
FIG. 21 is a schematic diagram of an arrangement of pixels in another minimal repeating unit in implementations of the present application.
FIG. 22 is a schematic diagram of a principle of an image capturing method in related arts.
FIG. 23 is a schematic flowchart of an image capturing method in some implementations of the present application.
FIG. 24 is a schematic diagram of a principle of an optical image capturing method in implementations of the present application.
FIG. 25 is another schematic diagram of a principle of an optical image capturing method in implementations of the present application.
FIGS. 26-29 are schematic flowcharts of image capturing methods in some implementations of the present application.
FIG. 30 is another schematic diagram of a principle of an optical image capturing method in implementations of the present application.
FIG. 31 is another schematic diagram of a principle of an optical image capturing method in implementations of the present application.
FIG. 32 is another schematic diagram of a principle of an optical image capturing method in implementations of the present application.
FIG. 33 is another schematic diagram of a principle of an optical image capturing method in implementations of the present application.
FIG. 34 is another schematic diagram of a principle of an optical image capturing method in implementations of the present application.
FIG. 35 is a schematic diagram of a mobile terminal in implementations of the present application.

### DETAILED DESCRIPTION

Implementations of the present application are described in detail below. Examples of the implementations are illustrated in the accompanying drawings, in which the same or similar reference numerals indicate the same or similar elements or elements with the same or similar functions throughout. The following implementations described with reference to the drawings are exemplary and only used to explain the present application, and should not be understood as a limitation to the present application.

The present application provides an image capturing method for an image sensor. The image sensor includes a two-dimensional (2D) pixel array. The 2D pixel array includes multiple panchromatic pixels and multiple color pixels. The 2D pixel array includes minimal repeating units. Each minimal repeating unit includes multiple sub-units. Each sub-unit includes multiple monochromatic pixels and multiple panchromatic pixels. The image capturing method includes the following. The 2D pixel array is controlled to be exposed to obtain a panchromatic original image and a color original image. The color original image is processed to assign all pixels in each sub-unit as a monochromatic large pixel corresponding to a single color in the sub-unit, and a pixel value of the monochromatic large pixel is outputted to obtain a color intermediate image. The panchromatic original image is processed to obtain a panchromatic intermediate image. The color intermediate image and/or the panchromatic intermediate image are processed to obtain a target image.

The present application further provides a camera assembly. The camera assembly includes an image sensor and a processing chip. The image sensor includes a 2D pixel array. The 2D pixel array includes multiple panchromatic pixels and multiple color pixels. The 2D pixel array includes minimal repeating units. Each minimal repeating unit includes multiple sub-units. Each sub-unit includes multiple monochromatic pixels and multiple panchromatic pixels. The image sensor is configured to be exposed to obtain a panchromatic original image and a color original image. The processing chip is configured to process the color original image to assign pixels in each sub-unit as a monochromatic large pixel corresponding to a single color in the sub-unit, and output a pixel value of the monochromatic large pixel to obtain a color intermediate image; process the panchromatic original image to obtain a panchromatic intermediate image; and process the color intermediate image and/or the panchromatic intermediate image to obtain a target image.

The present application further provides a mobile terminal. The mobile terminal includes an image sensor and a processor. The image sensor includes a 2D pixel array. The 2D pixel array includes multiple panchromatic pixels and multiple color pixels. The 2D pixel array includes minimal repeating units. Each minimal repeating unit includes multiple sub-units. Each sub-unit includes multiple monochromatic pixels and multiple panchromatic pixels. The image sensor is configured to be exposed to obtain a panchromatic original image and a color original image. The processor is configured to process the color original image to assign pixels in each sub-unit as a monochromatic large pixel corresponding to a single color in the sub-unit, and output a pixel value of the monochromatic large pixel to obtain a color intermediate image; process the panchromatic original image to obtain a panchromatic intermediate image; and process the color intermediate image and/or the panchromatic intermediate image to obtain a target image.

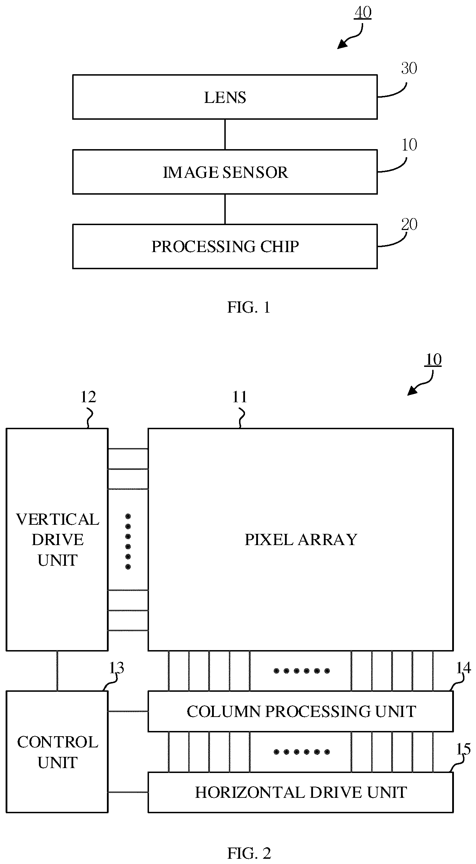

Referring to FIG. 1, the present application provides a camera assembly 40. The camera assembly 40 includes an image sensor 10, a processing chip 20, and a lens 30. The image sensor 10 is electrically coupled with the processing chip 20. The lens 30 is disposed on an optical path of the image sensor 10. The processing chip 20 may be packaged with the image sensor 10 and the lens 30 in a housing of the same camera assembly 40. Alternatively, the image sensor 10 and the lens 30 are packaged in the housing, and the processing chip 20 is disposed outside the housing.

Referring to FIG. 2, FIG. 2 is a schematic diagram of an image sensor 10 in implementations of the present application. The image sensor 10 includes a pixel array 11, a vertical drive unit 12, a control unit 13, a column processing unit 14, and a horizontal drive unit 15.

For example, the image sensor 10 may use a complementary metal oxide semiconductor (CMOS) photosensitive element or a charge-coupled device (CCD) photosensitive element.

For example, the pixel array 11 includes multiple pixels arranged in a 2D array (not illustrated in FIG. 2). Each pixel includes a photoelectric conversion element. Each pixel converts light incident on the pixel into electric charges according to an intensity of the light.

For example, the vertical drive unit 12 includes a shift register and an address decoder. The vertical drive unit 12 may have readout scan and reset scan functions. The readout scan refers to sequentially scanning unit pixels row by row and reading out signals from the unit pixels row by row. For example, a signal outputted from each pixel in a pixel row selected and scanned can be transmitted to the column processing unit 14. The reset scan is used to reset charges, where the photo-charges generated by the photoelectric conversion element are discarded such that new photo-charge accumulation may start.

For example, signal processing performed by the column processing unit 14 is a correlated double sampling (CDS) process. In the CDS process, a reset level and a signal level outputted from each pixel in a selected pixel row are retrieved, and a difference between the reset and signal levels is computed. Thus, signals of the pixels in the row are obtained. The column processing unit 14 may have an analog-to-digital (A/D) conversion function for converting an analog pixel signal into a digital format.

For example, the horizontal drive unit 15 includes a shift register and an address decoder. The horizontal drive unit 15 sequentially scans the pixel array 11 column by column. Each pixel column is sequentially processed by the column processing unit 14 through the selection scanning operation performed by the horizontal drive unit 15 and is sequentially outputted.

For example, the control unit 13 is configured to configure timing signals according to an operation mode, and use a variety of timing signals to control the vertical drive unit 13, the column processing unit 14, and the horizontal drive unit 15 to work in cooperation.

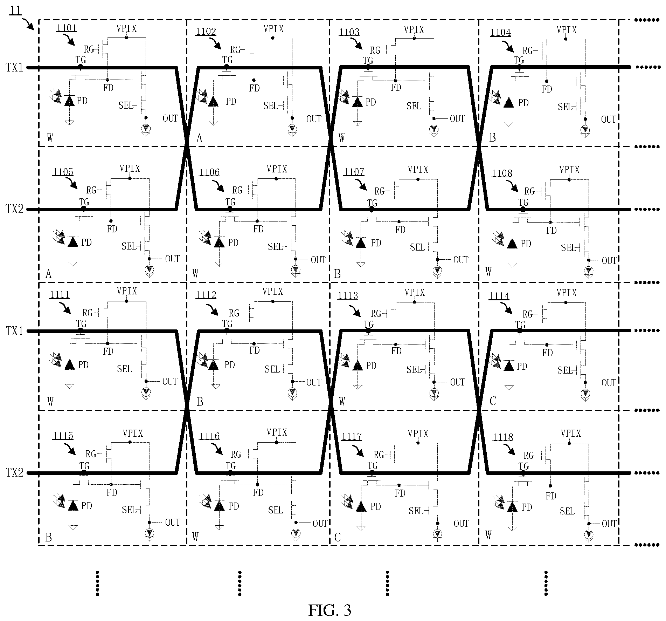

FIG. 3 is a schematic diagram of a connection between a pixel array 11 and exposure control lines in implementations of the present application. The pixel array 11 is a 2D array. The 2D pixel array includes multiple panchromatic pixels and multiple color pixels, where the color pixel has a narrower spectral response than the panchromatic pixel. Pixels in the pixel array 11 are arranged as follows:
W A W B
A W B W
W B W C
B W C W

It should be noted that, for the convenience of illustration, only some pixels in the pixel array 11 are illustrated in FIG. 3, and other surrounding pixels and wires are not illustrated and replaced with ellipses "...".

As illustrated in FIG. 3, pixels 1101, 1103, 1106, 1108, 1111, 1113, 1116, and 1118 are panchromatic pixels W. Pixels 1102 and 1105 are first color pixels A (such as red pixels R). Pixels 1104, 1107, 1112, and 1115 are second color pixels B (such as green pixels G). Pixels 1114 and 1117 are third color pixels C (such as blue pixels Bu). As can be seen from FIG. 3 that a control terminal TG of an exposure control circuit in each of panchromatic pixels W (pixels 1101, 1103, 1106, and 1108) is coupled with a first exposure control line TX1, and a control terminal TG of an exposure control circuit in each of panchromatic pixels W (1111, 1113, 1116, and 1118) is coupled with another first exposure control line TX1. A control terminal TG of an exposure control circuit in each of first color pixels A (pixels 1102 and 1105) and a control terminal TG of an exposure control circuit in each of second color pixels B (pixels 1104 and 1107) are coupled with a second exposure control line TX2. A control terminal TG of an exposure control circuit in each of second color pixels B (pixels 1112 and 1115) and a control terminal TG of an exposure control circuit in each of third color pixels C (pixels 1114 and 1117) are coupled with another second exposure control line TX2. An exposure duration for panchromatic pixels can be controlled with a first exposure control signal through each first exposure control line TX1. An exposure duration for color pixels (for example, first color pixels A and second color pixels B, second color pixels B and third color pixels C) can be controlled with a second exposure control signal through each second exposure control line TX2. As such, independent control of the exposure durations for the panchromatic pixels and the color pixels can be achieved. For example, the color pixels can be exposed once exposure of the panchromatic pixels is completed to achieve a desired imaging effect.

It can be understood that, in a color image sensor, pixels of different colors receive different exposure amounts per unit time. While some colors are saturated, other colors have not yet been exposed to an ideal state. For example, exposure to 60%-90% of a saturated exposure amount may have a relatively good signal-to-noise ratio and accuracy, but the implementations of the present application are not limited thereto.

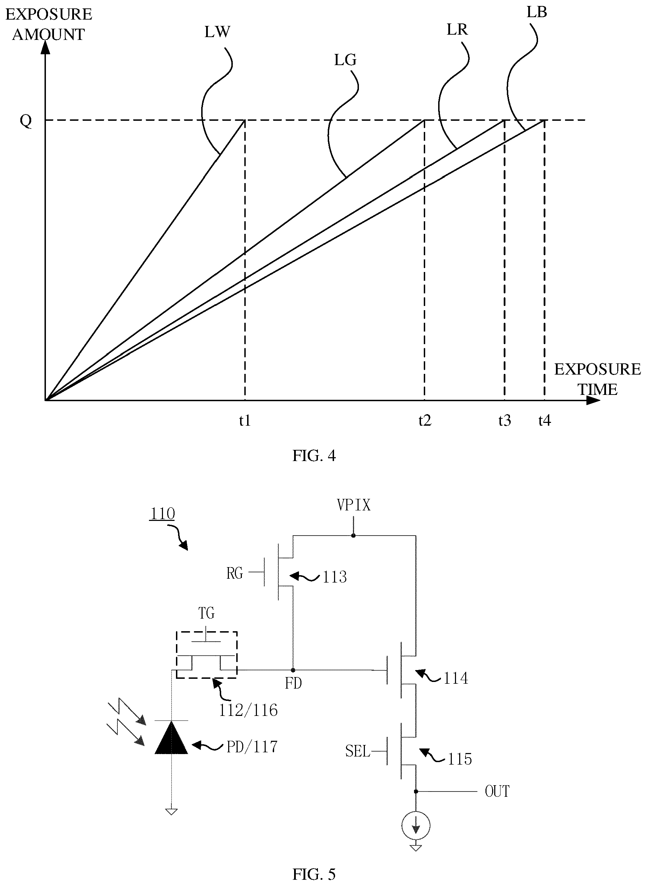

FIG. 4 illustrates RGBW (red, green, blue, panchromatic) as an example. In FIG. 4, the horizontal axis represents an exposure duration, the vertical axis represents an exposure amount, Q represents a saturated exposure amount, LW represents an exposure curve of the panchromatic pixel W, LG represents an exposure curve of the green pixel G, LR represents an exposure curve of the red pixel R, and LB represents an exposure curve of the blue pixel. As can be seen from FIG. 4, the slope of the exposure curve LW of the panchromatic pixel W is the steepest, which means that the panchromatic pixel W can obtain more exposure per unit time and reaches saturation at time t1. The slope of the exposure curve LG of the green pixel G is the second steepest, and the green pixel G reaches saturation at time t2. The slope of the exposure curve LR of the red pixel R is the third steepest, and the red pixel R reaches saturation at time t3. The slope of the exposure curve LB of the blue pixel B is the least steep, and the blue pixel B reaches saturation at time t4. At time t1, the panchromatic pixel W reaches saturation, but the exposure of the other three pixels R, G, B have not reached the ideal state yet.

In the related art, the exposure duration for each of four types of pixels R, G, B, W are jointly controlled. For example, each pixel row has a same exposure duration, coupled to a same exposure control line and controlled by a same exposure control signal. For example, still referring to FIG. 4, during a time period 0-t1, four types of pixels R, G, B, W can work normally. However, in this period, insufficient exposure duration and less exposure amount for pixels R, G, B may result in relatively low brightness, low signal-to-noise ratio, and not bright enough color in image displaying. In a time period t1-t4, W pixels are overexposed due to saturation and cannot work. The exposure amount data of the W pixels thus cannot truly reflect the object.

Based on the above reasons, the image sensor 10 (illustrated in FIG. 2) provided in the present application can reduce the exposure duration limit for the panchromatic pixels W and balance exposure for the panchromatic pixels and the color pixels (including but not limited to R, G, B) by independently controlling the exposure duration for the panchromatic pixels W and the exposure duration for the color pixels, thus improving the quality of image shooting. FIG. 3 is an example of independent control of the exposure duration for the panchromatic pixels W and the exposure duration for the color pixels. Specifically, the independent exposure control of the panchromatic pixels W and the color pixels is realized through different exposure control lines, thereby improving the quality of image shooting.

It should be noted that, the exposure curves in FIG. 4 are only illustrated as an example. The slopes and relative relationship of the curves may vary according to different response wavebands of pixels. The present application is not limited to the example illustrated in FIG. 4. For example, when the response waveband of the red pixel R is relatively narrow, the slope of the exposure curve of the red pixel R may be less steep than the slope of the exposure curve of the blue pixel B.

Referring to FIG. 2 and FIG. 3, the first exposure control line TX1 and the second exposure control line TX2 are coupled with the vertical drive unit 12 in FIG. 2 to transmit the corresponding exposure control signal in the vertical drive unit 12 to the control terminal TG of each of the exposure control circuits of the pixels in the pixel array 11.

It can be understood that since the pixel array 11 includes multiple groups of pixel rows, the vertical drive unit 12 is coupled with multiple first exposure lines TX1 and multiple second exposure control lines TX2. Each of the multiple first exposure lines TX1 and multiple second exposure control lines TX2 corresponds to a respective group of pixel rows.

For example, the 1^{st} first exposure control line TX1 corresponds to panchromatic pixels in the 1^{st} and 2^{nd} rows, the 2^{nd} first exposure control line TX1 corresponds to panchromatic pixels in the 3^{rd} and 4^{th} rows, the 3^{rd} first exposure control line TX1 corresponds to panchromatic pixels in the 5^{th} and 6^{th} rows, the 4^{th} first exposure control line TX1 corresponds to panchromatic pixels in the 7^{th} and 8^{th} rows, and so on. The correspondence between the further first exposure control line TX1 and the panchromatic pixels in further rows will not be repeated herein. The signal timings transmitted by different first exposure control lines TX1 are also different, and the signal timings are configured by the vertical drive unit 12.

For example, the 1^{st} second exposure control line TX2 corresponds to color pixels in the 1^{st} and 2^{nd} rows, the 2^{nd} second exposure control line TX2 corresponds to color pixels in the 3^{rd} and 4^{th} rows, the 3^{rd} second exposure control line TX2 corresponds to color pixels in the 5^{th} and 6^{th} rows, the 4^{th} second exposure control line TX2 corresponds to color pixels in the 7^{th} and 8^{th} rows, and so on. The correspondence between the further second exposure control line TX2 and the color pixels in further rows will not be repeated herein. The signal timings transmitted by different second exposure control lines TX2 are also different, and the signal timings are configured by the vertical drive unit 12.

FIG. 5 is a schematic diagram of a pixel circuit 110 in implementations of the present application. The pixel circuit 110 in FIG. 5 may be applied in each pixel in FIG. 3. The following will describe a principle of the pixel circuit 110 in conjunction with FIG. 3 and FIG. 5.

As illustrated in FIG. 5, the pixel circuit 110 includes a photoelectric conversion element 117 (for example, a photodiode PD), an exposure control circuit 116 (for example, a transfer transistor 112), a reset circuit (for example, a reset transistor 113), an amplifying circuit (for example, an amplifying transistor 114), and a selecting circuit (for example, a selecting transistor 115). In implementations of the present application, the transfer transistor 112, the reset transistor 113, the amplifying transistor 114, and the selecting transistor 115 are each, for example, a MOS transistor, but are not limited thereto.

For example, referring to FIG. 2, FIG. 3, and FIG. 5, the gate TG of the transfer transistor 112 is connected to the vertical drive unit 12 through the exposure control line. The gate RG of the reset transistor 113 is connected to the vertical drive unit 12 through a reset control line (not illustrated in the figures). The gate SEL of the selecting transistor 114 is connected to the vertical drive unit through a selecting line (not illustrated in the figures). The exposure control circuit 116 (such as transfer transistor 112) in each pixel circuit 110 is electrically connected with the photoelectric conversion element 117 and is configured to transfer a potential accumulated by the photoelectric conversion element 117 after illumination. For example, the photoelectric conversion element 117 includes the photodiode PD, and the anode of the photodiode PD is connected to ground, for example. The photodiode PD converts the received light into charges. The cathode of the photodiode PD is connected to a floating diffusion unit FD through the exposure control circuit 116 (for example, the transfer transistor 112). The floating diffusion unit FD is connected to the gate of the amplifying transistor 114 and the source of the reset transistor 113.

For example, the exposure control circuit 116 is the transfer transistor 112, and the control terminal TG of the exposure control circuit 116 is the gate of the transfer transistor 112. When a pulse of an effective level (for example, VPIX level) is transmitted to the gate of the transfer transistor 112 through the exposure control line (for example, TX1 or TX2), the transfer transistor 112 is turned on. The transfer transistor 12 transmits the charges generated from photoelectric conversion by the photodiode PD to the floating diffusion unit FD.

For example, the drain of the reset transistor 113 is connected to a pixel power supply VPIX. The source of the reset transistor 113 is connected to the floating diffusion unit FD. Before the charges are transferred from the photodiode PD to the floating diffusion unit FD, a pulse of an effective reset level is transmitted to the gate of the reset transistor 113 through the reset line, and the reset transistor 113 is turned on. The reset transistor 113 resets the floating diffusion unit FD to the pixel power supply VPIX.

For example, the gate of the amplifying transistor 114 is connected to the floating diffusion unit FD. The drain of the amplifying transistor 114 is connected to the pixel power supply VPIX. After the floating diffusion unit FD is reset by the reset transistor 113, the amplifying transistor 114 outputs a reset level through an output terminal OUT via the selecting transistor 115. After the charges of the photodiode PD are transferred by the transfer transistor 112, the amplifying transistor 114 outputs a signal level through the output terminal OUT via the selecting transistor 115.

For example, the drain of the selecting transistor 115 is connected to the source of the amplifying transistor 114. The source of selecting transistor 115 is connected to the column processing unit 14 in FIG. 2 through the output terminal OUT. When a pulse of an effective level is transmitted to the gate of selecting transistor 115 through the selecting line, the selecting transistor 115 is turned on. The signal outputted from the amplifying transistor 114 is transmitted to the column processing unit 14 through the selecting transistor 115.

It should be noted that the pixel structure of the pixel circuit 110 in the implementations of the present application is not limited to the structure illustrated in FIG. 5. For example, the pixel circuit 110 may have a three-transistor pixel structure, in which the functions of the amplifying transistor 114 and the selecting transistor 115 are realized by one transistor. For example, the exposure control circuit 116 is also not limited to one transfer transistor 112, and other electronic devices or structures with control terminals to control the conduction function can be used as the exposure control circuit in the implementations of the present application. The implementation of the single transfer transistor 112 is simple, low cost, and easy to control.

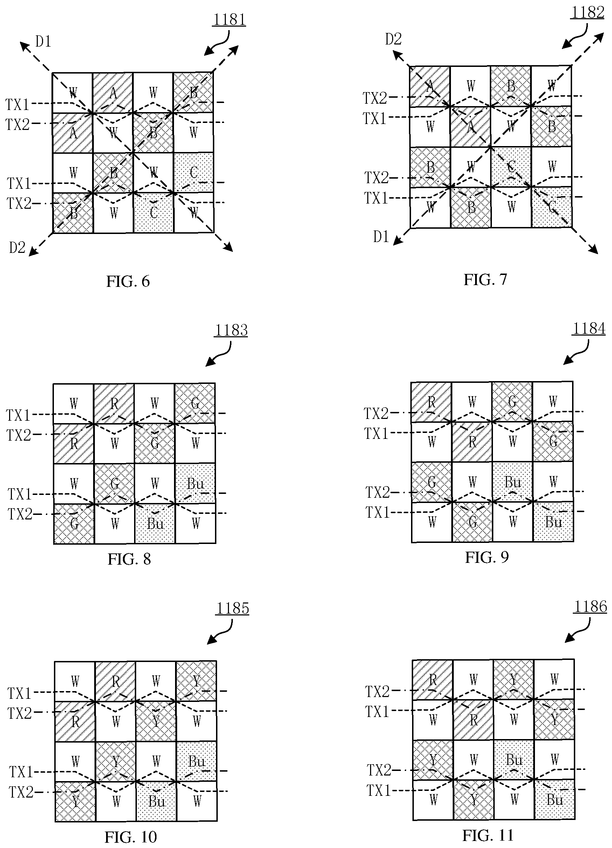

FIGS. 6-21 illustrates multiple examples of arrangements of pixels in the image sensor 10 (illustrated in FIG. 2). Referring to FIG. 2 and FIGS. 6-21, the image sensor 10 includes a 2D pixel array (that is, the pixel array 11 as illustrated in FIG. 3) including multiple color pixels (for example, multiple first color pixels A, multiple second color pixels B, and multiple color pixels C) and multiple panchromatic pixels W. The color pixel has a narrower spectral response than the panchromatic pixel. A response spectrum of a color pixel is, for example, a part of a response spectrum of a panchromatic pixel W. The 2D pixel array includes minimal repeating units (FIGS. 6-21 illustrate various examples of the minimal repeating units of pixels in image sensors 10). The 2D pixel array is composed of multiple minimal repeating units. The minimal repeating unit is repeated and arranged in rows and columns. In the minimal repeating unit, the panchromatic pixels W are arranged in the first diagonal direction D1, and the color pixels are arranged in the second diagonal direction D2 different from the first diagonal direction D1. A first exposure duration for at least two panchromatic pixels adjacent in the first diagonal direction D1 is controlled by a first exposure signal, and a second exposure duration for at least two color pixels adjacent in the second diagonal direction D2 is controlled by a second exposure signal, so as to realize independent control of the exposure duration for panchromatic pixels and the exposure duration for color pixels. Each minimum repeating unit includes multiple sub-units, and each sub-unit includes multiple monochromatic pixels (for example, multiple first color pixels A, multiple second color pixels B, or multiple third color pixels C) and multiple panchromatic pixels W. For example, referring to FIG. 3 and FIG. 5, pixels 1101-1108 and pixels 1111-1118 form a minimal repeating unit, where pixels 1101, 1103, 1106, 1108, 1111, 1113, 1116, and 1118 are panchromatic pixels, and pixels 1102, 1104, 1105, 1107, 1112, 1114, 1115, and 1117 are color pixels. Pixels 1101, 1102, 1105, and 1106 form a sub-unit, where pixels 1101 and 1106 are panchromatic pixels, and pixels 1102 and 1105 are monochromatic pixels (for example, first color pixels A); pixels 1103, 1104, 1107, and 1108 form a sub-unit, where pixels 1103 and 1108 are panchromatic pixels, and pixels 1104 and 1107 are monochromatic pixels (for example, second color pixels B); pixels 1111, 1112, 1115, and 1116 form a sub-unit, where pixels 1111 and 1116 are panchromatic pixels, and pixels 1112 and 1115 are monochromatic pixels (for example, second color pixels B); pixels 1113, 1114, 1117, and 1118 form a sub-unit, where pixels 1113 and 1118 are panchromatic pixels, and pixels 1114 and 1117 are monochromatic pixels (for example, third color pixels C).

For example, the minimal repeating unit has the same number of pixels in rows and columns. For example, the minimal repeating unit has, but is not limited to, 4 rows and 4 columns, 6 rows and 6 columns, 8 rows and 8 columns, or 10 rows and 10 columns. For example, the sub-unit in the minimal repeating unit has the same number of pixels in rows and columns. For example, the sub-unit includes, but is not limited to, 2 rows and 2 columns, 3 rows and 3 columns, 4 rows and 4 columns, or 5 rows and 5 columns. Such arrangement helps to balance resolution and color performance of the image in the row and column directions, thus improving the display effect.

For example, FIG. 6 is a schematic diagram of an arrangement of pixels in a minimal repeating unit 1181 in implementations of the present application. The minimal repeating unit has 16 pixels in 4 rows and 4 columns, and a sub-unit has 4 pixels in 2 rows and 2 columns. The 16 pixels are arranged as follow:
W A W B
A W B W
W B W C
B W C W
where W represents a panchromatic pixel, A represents a first color pixel in multiple color pixels, B represents a second color pixel in the multiple color pixels, and C represents a third color pixel in the multiple color pixels.

For example, as illustrated in FIG. 6, the panchromatic pixels W are arranged in a first diagonal direction D1 (that is, a direction connecting the upper left corner and the lower right corner in FIG. 6). The color pixels are arranged in a second diagonal direction D2 (such as a direction connecting the upper right corner and the lower left corner in FIG. 6). The first diagonal direction D1 is different from the second diagonal direction D2. For example, the first diagonal line is perpendicular to the second diagonal line. A first exposure duration for two adjacent panchromatic pixels W (the panchromatic pixel in the first row and first column and the panchromatic pixel in the second row and second column from the upper left) in the first diagonal direction D1 is controlled by a first exposure signal. A second exposure duration for at least two adjacent color pixels (the color pixel B in the fourth row and first column and the color pixel B in the third row and second column from the upper left) in the second diagonal direction D2 is controlled by a second exposure signal.

It should be noted that the first diagonal direction D1 and the second diagonal direction D2 are not limited to the diagonal lines, but also include directions parallel to the diagonal lines. For example, in FIG. 6, panchromatic pixels 1101, 1106, 1113, and 1118 are arranged in the first diagonal direction D1, panchromatic pixels 1103 and 1108 are also arranged in the first diagonal direction D1, and panchromatic pixels 1111 and 1116 are also arranged in the first diagonal direction D1. The second color pixels 1104, 1107, 1112, and 1115 are arranged in the second diagonal direction D2, the first color pixels 1102 and 1105 are also arranged in the second diagonal direction D2, and the third color pixels 1114 and 1117 are also arranged in the second diagonal direction D2. The first diagonal direction D1 and the second diagonal direction D2 in FIGS. 7-21 below are explained in the same way as the above. The "direction" here is not a single direction, but can be understood as the concept of a "straight line" indicating the arrangement, and can be a two-way direction indicated at both ends of the straight line.

It should be understood that the orientation or positional relationship indicated by the terms "upper", "lower", "left", and "right" here and below is based on the orientation or positional relationship illustrated in the drawings. It is only for the convenience of describing the present application and simplifying the description, rather than indicating or implying that the apparatus or element referred to must have a specific orientation and be constructed and operated in a specific orientation. Thus, it cannot be understood as a limit to the present application.

For example, as illustrated in FIG. 6, the panchromatic pixels in the first row and the second row are connected by a first exposure control line TX1 in a "W" shape to achieve independent control of the exposure duration for the panchromatic pixels. The color pixels (A and B) in the first row and the second row are connected by a second exposure control line TX2 in a "W" shape to achieve independent control of the exposure duration for the color pixels. The panchromatic pixels in the third row and the fourth row are connected by a first exposure control line TX1 in a "W" shape to achieve independent control of the exposure duration for the panchromatic pixels. The color pixels (B and C) in the third row and the fourth row are connected by a second exposure control line TX2 in a "W" shape to achieve independent control of the exposure duration for the color pixels. For example, the first exposure signal is transmitted via the first exposure control line TX1, and the second exposure signal is transmitted via the second exposure control line TX2. For example, the first exposure control line TX1 is in a "W" shape, and is electrically coupled with a control terminal of each of exposure control circuits in panchromatic pixels in adjacent two rows. The second exposure control line TX2 is in a "W" shape, and is electrically coupled with a control terminal of each of exposure-control circuits in color pixels in adjacent two rows. For the specific connection, reference may be made to the description of the connection and pixel circuits in the relevant parts of FIG. 3 and FIG. 5 above.

It should be noted that the first exposure control line TX1 and the second exposure control line TX2 each being in a "W" shape does not mean that the physical wiring must be set strictly in accordance with the "W" shape, as long as the connection corresponds to the arrangement of panchromatic pixels and color pixels. For example, the setting of the W-shaped exposure control line corresponds to the W-shaped pixel arrangement. Such arrangement has simple wiring and is good for the resolution and color effects. The independent control of exposure duration for panchromatic pixels and exposure duration for color pixels can be realized at low cost.

For example, FIG. 7 is a schematic diagram of an arrangement of pixels in another minimal repeating unit 1182 in implementations of the present application. The minimal repeating unit has 16 pixels in 4 rows and 4 columns, and a sub-unit has 4 pixels in 2 rows and 2 columns. The 16 pixels are arranged as follow:
A W B W
W A W B
B W C W
W B W C
where W represents a panchromatic pixel, A represents a first color pixel in multiple color pixels, B represents a second color pixel in the multiple color pixels, and C represents a third color pixel in the multiple color pixels.

For example, as illustrated in FIG. 7, the panchromatic pixels W are arranged in a first diagonal direction D1 (that is, a direction connecting the upper right corner and the lower left corner in FIG. 7). The color pixels are arranged in a second diagonal direction D2 (such as a direction connecting the upper left corner and the lower right corner in FIG. 7). For example, the first diagonal line is perpendicular to the second diagonal line. A first exposure duration for two adjacent panchromatic pixels W (the panchromatic pixel in the first row and second column and the panchromatic pixel in the second row and first column from the upper left) in the first diagonal direction D1 is controlled by a first exposure signal. A second exposure duration for at least two adjacent color pixels (the color pixel A in the first row and first column and the color pixel B in the second row and second column from the upper left) in the second diagonal direction D2 is controlled by a second exposure signal.

For example, as illustrated in FIG. 7, the panchromatic pixels in the first row and the second row are connected by a first exposure control line TX1 in a "W" shape to achieve independent control of the exposure duration for the panchromatic pixels. The color pixels (A and B) in the first row and the second row are connected by a second exposure control line TX2 in a "W" shape to achieve independent control of the exposure duration for the color pixels. The panchromatic pixels in the third row and the fourth row are connected by a first exposure control line TX1 in a "W" shape to achieve independent control of the exposure duration for the panchromatic pixels. The color pixels (B and C) in the third row and the fourth row are connected by a second exposure control line TX2 in a "W" shape to achieve independent control of the exposure duration for the color pixels.

For example, FIG. 8 is a schematic diagram of an arrangement of pixels in another minimal repeating unit 1183 in implementations of the present application. FIG. 9 is a schematic diagram of an arrangement of pixels in another minimal repeating unit 1184 in implementations of the present application. The implementations of FIG. 8 and FIG. 9 corresponds to the arrangements in FIG. 6 and

FIG. 7 respectively, where the first color pixel A is a red pixel R, the second color pixel B is a green pixel G, and the third color pixel C is a blue pixel Bu.

It should be noted that, in some implementations, a response waveband of the panchromatic pixel is a visible band (e.g., 400nm-760nm). For example, an infrared filter may be employed on the panchromatic pixel W to filter out infrared light. In some implementations, the response waveband of the panchromatic pixel is a visible band and a near infrared band (e.g., 400nm-1000nm), and is matched with a response waveband of the photoelectric conversion element (such as the photodiode PD) in the image sensor 10. For example, the panchromatic pixel W may not be provided with a filter, and the response waveband of the panchromatic pixel W is determined by the response waveband of the photodiode, and thus the response waveband of the panchromatic pixel W matches the response waveband of the photodiode. The implementations of the present application include but are not limited to the above waveband.

For example, FIG. 10 is a schematic diagram of an arrangement of pixels in another minimal repeating unit 1185 in implementations of the present application. FIG. 11 is a schematic diagram of an arrangement of pixels in another minimal repeating unit 1186 in implementations of the present application. The implementations of FIG. 10 and FIG. 11 corresponds to the arrangements in FIG. 6 and FIG. 7 respectively, where the first color pixel A is a red pixel R, the second color pixel B is a yellow pixel Y, and the third color pixel C is a blue pixel Bu.

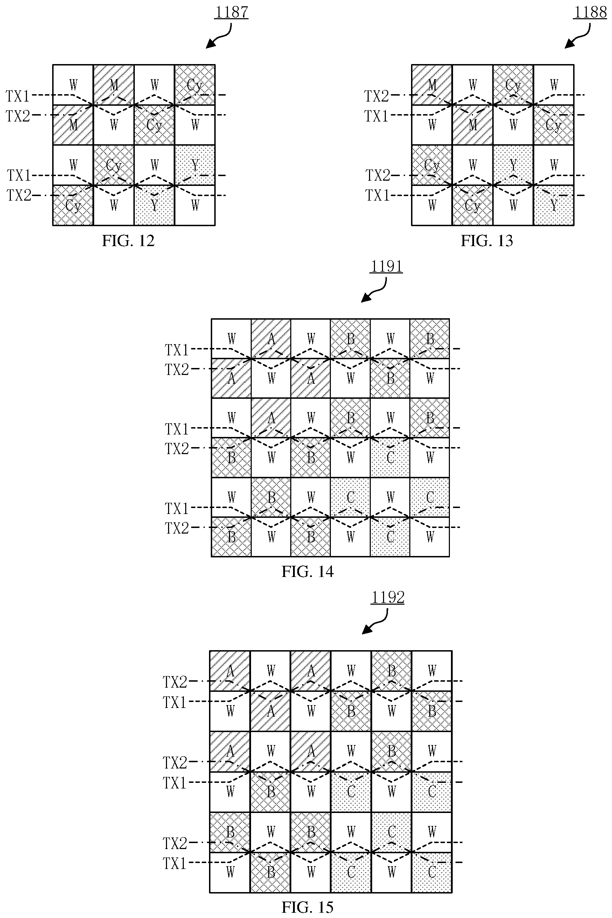

For example, FIG. 12 is a schematic diagram of an arrangement of pixels in another minimal repeating unit 1187 in implementations of the present application. FIG. 13 is a schematic diagram of an arrangement of pixels in another minimal repeating unit 1188 in implementations of the present application. The implementations of FIG. 12 and FIG. 13 corresponds to the arrangements in FIG. 6 and FIG. 7 respectively, where the first color pixel A is a magenta pixel M, the second color pixel B is a cyan pixel Cy, and the third color pixel C is a yellow pixel Y.

For example, FIG. 14 is a schematic diagram of an arrangement of pixels in another minimal repeating unit 1191 in implementations of the present application. The minimal repeating unit has 36 pixels in 6 rows and 6 columns, and a sub-unit has 9 pixels in 3 rows and 3 columns. The 36 pixels are arranged as follow:
W A W B W B
A W A W B W
W A W B W B
B W B W C W
W B W C W C
B W B W C W
where W represents a panchromatic pixel, A represents a first color pixel in multiple color pixels, B represents a second color pixel in the multiple color pixels, and C represents a third color pixel in the multiple color pixels.

For example, as illustrated in FIG. 14, the panchromatic pixels in the first row and the second row are connected by a first exposure control line TX1 in a "W" shape to achieve independent control of the exposure duration for the panchromatic pixels. The color pixels (A and B) in the first row and the second row are connected by a second exposure control line TX2 in a "W" shape to achieve independent control of the exposure duration for the color pixels. The panchromatic pixels in the third row and the fourth row are connected by a first exposure control line TX1 in a "W" shape to achieve independent control of the exposure duration for the panchromatic pixels. The color pixels (A, B, and C) in the third row and the fourth row are connected by a second exposure control line TX2 in a "W" shape to achieve independent control of the exposure duration for the color pixels. The panchromatic pixels in the fifth row and the sixth row are connected by a first exposure control line TX1 in a "W" shape to achieve independent control of the exposure duration for the panchromatic pixels. The color pixels (B and C) in the fifth row and the sixth row are connected by a second exposure control line TX2 in a "W" shape to achieve independent control of the exposure duration for the color pixels.

For example, FIG. 15 is a schematic diagram of an arrangement of pixels in another minimal repeating unit 1192 in implementations of the present application. The minimal repeating unit has 36 pixels in 6 rows and 6 columns, and the sub-unit has 9 pixels in 3 rows and 3 columns. The 36 pixels are arranged as follow:
A W A W B W
W A W B W B
A W A W B W
W B W C W C
B W B W C W
W B W C W C
where W represents a panchromatic pixel, A represents a first color pixel in multiple color pixels, B represents a second color pixel in the multiple color pixels, and C represents a third color pixel in the multiple color pixels.

For example, as illustrated in FIG. 15, the panchromatic pixels in the first row and the second row are connected by a first exposure control line TX1 in a "W" shape to achieve independent control of the exposure duration for the panchromatic pixels. The color pixels (A and B) in the first row and the second row are connected by a second exposure control line TX2 in a "W" shape to achieve independent control of the exposure duration for the color pixels. The panchromatic pixels in the third row and the fourth row are connected by a first exposure control line TX1 in a "W" shape to achieve independent control of the exposure duration for the panchromatic pixels. The color pixels (A, B, and C) in the third row and the fourth row are connected by a second exposure control line TX2 in a "W" shape to achieve independent control of the exposure duration for the color pixels. The panchromatic pixels in the fifth row and the sixth row are connected by a first exposure control line TX1 in a "W" shape to achieve independent control of the exposure duration for the panchromatic pixels. The color pixels (B and C) in the fifth row and the sixth row are connected by a second exposure control line TX2 in a "W" shape to achieve independent control of the exposure duration for the color pixels.

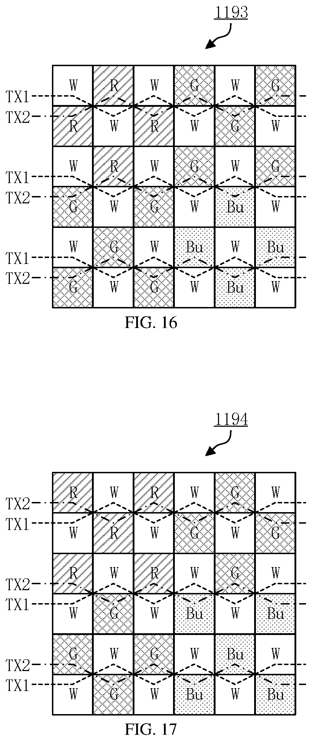

For example, FIG. 16 is a schematic diagram of an arrangement of pixels in another minimal repeating unit 1193 in implementations of the present application. FIG. 17 is a schematic diagram of an arrangement of pixels in another minimal repeating unit 1194 in implementations of the present application. The implementations of FIG. 16 and FIG. 17 corresponds to the arrangements in FIG. 14 and FIG. 15 respectively, where the first color pixel A is a red pixel R, the second color pixel B is a green pixel G, and the third color pixel C is a blue pixel Bu.

For example, in other implementations, the first color pixel A is a red pixel R, the second color pixel B is a yellow pixel Y, and the third color pixel C is a blue pixel Bu. For example, in other implementations, the first color pixel A is a magenta pixel M, the second color pixel B is a cyan pixel Cy, and the third color pixel C is a yellow pixel Y. The implementations of the present application include but are not limited to the above. For specific circuit connection, reference may be made to the above, which will not be repeated herein.

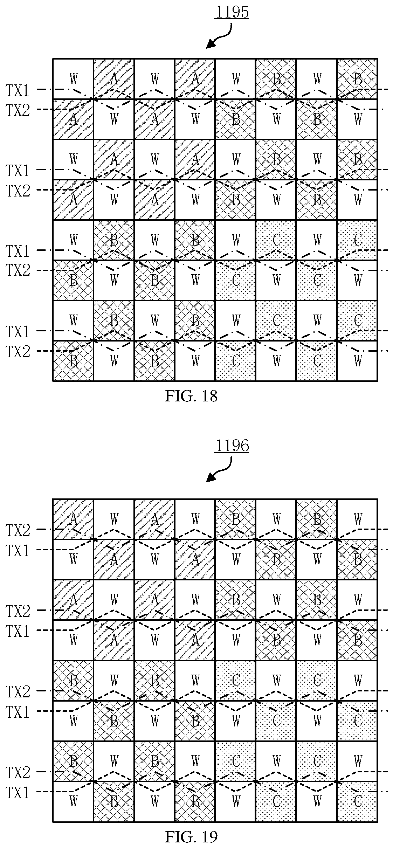

For example, FIG. 18 is a schematic diagram of an arrangement of pixels in another minimal repeating unit 1195 in implementations of the present application. The minimal repeating unit has 64 pixels in 8 rows and 8 columns, and a sub-unit has 16 pixels in 4 rows and 4 columns. The 64 pixels are arranged as follow:
WAWAWBWB
AWAWBWBW
WAWAWBWB
AWAWBWBW
WBWBWCWC
BWBWCWCW
WBWBWCWC
BWBWCWCW
where W represents a panchromatic pixel, A represents a first color pixel in multiple color pixels, B represents a second color pixel in the multiple color pixels, and C represents a third color pixel in the multiple color pixels.

For example, as illustrated in FIG. 18, the panchromatic pixels in the first row and the second row are connected by a first exposure control line TX1 in a "W" shape to achieve independent control of the exposure duration for the panchromatic pixels. The color pixels (A and B) in the first row and the second row are connected by a second exposure control line TX2 in a "W" shape to achieve independent control of the exposure duration for the color pixels. The panchromatic pixels in the third row and the fourth row are connected by a first exposure control line TX1 in a "W" shape to achieve independent control of the exposure duration for the panchromatic pixels. The color pixels (A and B) in the third row and the fourth row are connected by a second exposure control line TX2 in a "W" shape to achieve independent control of the exposure duration for the color pixels. The panchromatic pixels in the fifth row and the sixth row are connected by a first exposure control line TX1 in a "W" shape to achieve independent control of the exposure duration for the panchromatic pixels. The color pixels (B and C) in the fifth row and the sixth row are connected by a second exposure control line TX2 in a "W" shape to achieve independent control of the exposure duration for the color pixels. The panchromatic pixels in the seventh row and the eighth row are connected by a first exposure control line TX1 in a "W" shape to achieve independent control of the exposure duration for the panchromatic pixels. The color pixels (B and C) in the seventh row and the eighth row are connected by a second exposure control line TX2 in a "W" shape to achieve independent control of the exposure duration for the color pixels.

For example, FIG. 19 is a schematic diagram of an arrangement of pixels in another minimal repeating unit 1196 in implementations of the present application. The minimal repeating unit has 64 pixels in 8 rows and 8 columns, and a sub-unit has 16 pixels in 4 rows and 4 columns. The 64 pixels are arranged as follow:
AWAWBWBW
WAWAWBWB
AWAWBWBW
WAWAWBWB
BWBWCWCW
WBWBWCWC
BWBWCWCW
WBWBWCWC
where W represents a panchromatic pixel, A represents a first color pixel in multiple color pixels, B represents a second color pixel in the multiple color pixels, and C represents a third color pixel in the multiple color pixels.

For example, as illustrated in FIG. 19, the panchromatic pixels in the first row and the second row are connected by a first exposure control line TX1 in a "W" shape to achieve independent control of the exposure duration for the panchromatic pixels. The color pixels (A and B) in the first row and the second row are connected by a second exposure control line TX2 in a "W" shape to achieve independent control of the exposure duration for the color pixels. The panchromatic pixels in the third row and the fourth row are connected by a first exposure control line TX1 in a "W" shape to achieve independent control of the exposure duration for the panchromatic pixels. The color pixels (A and B) in the third row and the fourth row are connected by a second exposure control line TX2 in a "W" shape to achieve independent control of the exposure duration for the color pixels. The panchromatic pixels in the fifth row and the sixth row are connected by a first exposure control line TX1 in a "W" shape to achieve independent control of the exposure duration for the panchromatic pixels. The color pixels (B and C) in the fifth row and the sixth row are connected by a second exposure control line TX2 in a "W" shape to achieve independent control of the exposure duration for the color pixels. The panchromatic pixels in the seventh row and the eighth row are connected by a first exposure control line TX1 in a "W" shape to achieve independent control of the exposure duration for the panchromatic pixels. The color pixels (B and C) in the seventh row and the eighth row are connected by a second exposure control line TX2 in a "W" shape to achieve independent control of the exposure duration for the color pixels.

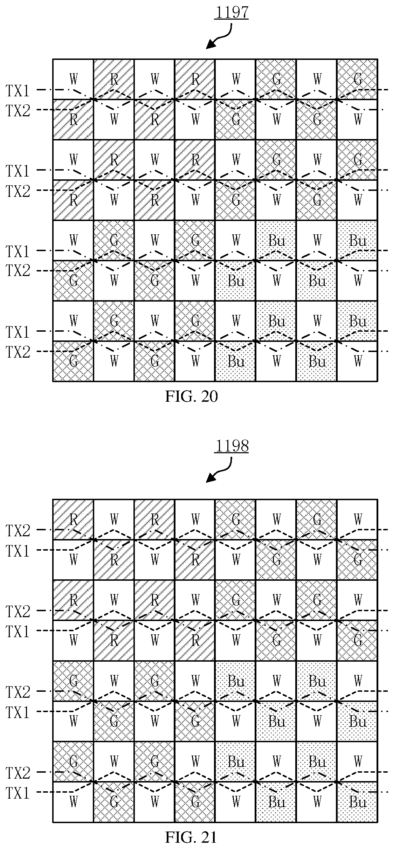

For example, FIG. 20 is a schematic diagram of an arrangement of pixels in another minimal repeating unit 1197 in implementations of the present application. FIG. 21 is a schematic diagram of an arrangement of pixels in another minimal repeating unit 1198 in implementations of the present application. The implementations of FIG. 20 and FIG. 21 corresponds to the arrangements in FIG. 18 and FIG. 19 respectively, where the first color pixel A is a red pixel R, the second color pixel B is a green pixel G, and the third color pixel C is a blue pixel Bu.

For example, in other implementations, the first color pixel A is a red pixel R, the second color pixel B is a yellow pixel Y, and the third color pixel C is a blue pixel Bu. For example, the first color pixel A is a magenta pixel M, the second color pixel B is a cyan pixel Cy, and the third color pixel C is a yellow pixel Y. The implementations of the present application include but are not limited to the above. For specific circuit connection, reference may be made to the above, which will not be repeated herein.

It can be seen from the above implementations illustrated in FIGS. 6-21 that the image sensor 10 (as illustrated in FIG. 2) includes multiple color pixels and multiple panchromatic pixels W arranged in a matrix. The color pixels and the panchromatic pixels are arranged at equal intervals in rows and columns.

For example, in the row direction, one transparent pixel, one color pixel, one transparent pixel, one color pixel, etc. are alternately arranged.

For example, in the column direction, one transparent pixel, one color pixel, one transparent pixel, and one color pixel, etc. are alternately arranged.

With reference to FIG. 3 and FIG. 4, the first exposure control line TX1 is electrically coupled with a control terminal TG of each of exposure control circuits 116 (such as the gate of the transfer transistor 112) in panchromatic pixels W in the (2n-1)-th row and 2n-th row, and the second exposure control line TX2 is electrically coupled with a control terminal TG of each of exposure control circuits 116 (such as the gate of the transfer transistor 112) in color pixels in the (2n-1)-th row and 2n-th row, where n is a natural number greater than or equal to 1.

For example, when n=1, the first exposure control line TX1 is electrically coupled with a control terminal TG of each of exposure control circuits 116 in panchromatic pixels W in the 1^{st} row and 2^{nd} row, and the second exposure control line TX2 is electrically coupled with a control terminal TG of each of exposure control circuits 116 in color pixels in the 1^{st} row and 2^{nd} row. When n=2, the first exposure control line TX1 is electrically coupled with a control terminal TG of each of exposure control circuits 116 in panchromatic pixels W in the 3^{rd} row and 4^{th} row, and the second exposure control line TX2 is electrically coupled with a control terminal TG of each of exposure control circuits 116 in color pixels in the 3^{rd} row and 4^{th} row. Similar connections may be applied to other values of n, which will not be repeated herein.

In some implementations, the first exposure duration is shorter than the second exposure duration. In some implementations, a ratio of the first exposure duration to the second exposure duration may be one of 1:2, 1:3, and 1:4. For example, in a dark environment, the color pixels are more likely to be underexposed. Therefore, the ratio of the first exposure duration to the second exposure duration can be set to be 1:2, 1:3, or 1:4 according to ambient brightness. For example, when the exposure ratio is the above integer ratio or close to the integer ratio, it is advantageous for the setting of timing and the setting and control of signals.

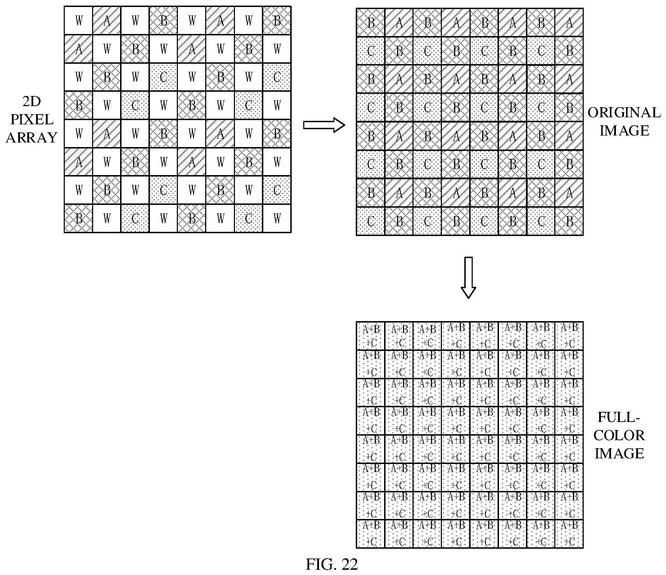

With reference to FIG. 22, in the related art, if a pixel array in an image sensor includes panchromatic pixels and color pixels, during operation, the image sensor may fit a pixel value of each panchromatic pixel in the pixel array to pixel values of other color pixels, thereby outputting an original image that includes only color pixels. Specifically, as an example, the pixel A is the red pixel R, the pixel B is the green pixel G, and the pixel C is the blue pixel Bu. After the column processing unit in the image sensor reads out pixel values of multiple red pixels R, pixel values of multiple green pixels G, pixel values of multiple blue pixels Bu, and pixel values of multiple panchromatic pixels W, the image sensor first fits the pixel value of each panchromatic pixel W to the red pixel R, the green pixel G, and the blue pixel Bu adjacent to the panchromatic pixel, and then converts the image arranged in a non-Bayer array to an original image arranged in a Bayer array to output for subsequent processing of the original image by the processing chip, such as performing interpolation on the original image to obtain a full-color image (in the full-color image, a pixel value of each pixel is composed of red, green, and blue components). In such process, the image sensor may need to execute a complex algorithm with a large computation amount. In addition, since the Qualcomm platform does not support processing of an image arranged in the non-Bayer array, additional hardware (such as additional processing chip) may need to be added to the image sensor to perform conversion of the image arranged in the non-Bayer array into the original image arranged in the Bayer array.

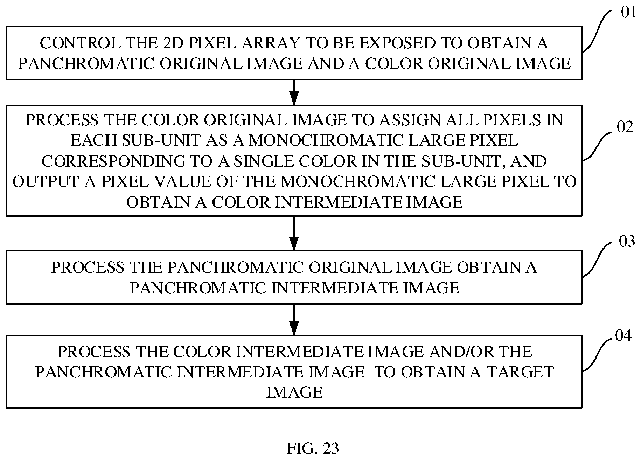

In order to reduce a computation amount of the image sensor and avoid additional hardware added in the image sensor, the present application provides an image capturing method. As illustrated in FIG. 23, the image capturing method includes the following.

At 01, the 2D pixel array is controlled to be exposed to obtain a panchromatic original image and a color original image.

At 02, the color original image is processed to assign all pixels in each sub-unit as a monochromatic large pixel corresponding to a single color in the sub-unit, and a pixel value of the monochromatic large pixel is outputted to obtain a color intermediate image.

At 03, the panchromatic original image is processed to obtain a panchromatic intermediate image.

At 04, the color intermediate image and/or the panchromatic intermediate image are processed to obtain a target image.

Referring to FIG. 1 and FIG. 2, the image capturing method in the present application may be implemented by the camera assembly 40. The step 01 may be implemented by the image sensor 10. The steps 02, 03, and 04 may be implemented by the processing chip 20. That is, the image sensor 10 may be exposed to obtain the panchromatic original image and the color original image. The processing chip 20 may be configured to process the color original image to assign pixels in each sub-unit as the monochromatic large pixel corresponding to the single color in the sub-unit, and output the pixel value of the monochromatic large pixel to obtain the color intermediate image. The processing chip 20 may be further configured to process the panchromatic original image to obtain the panchromatic intermediate image, and process the color intermediate image and/or the panchromatic intermediate image to obtain the target image.

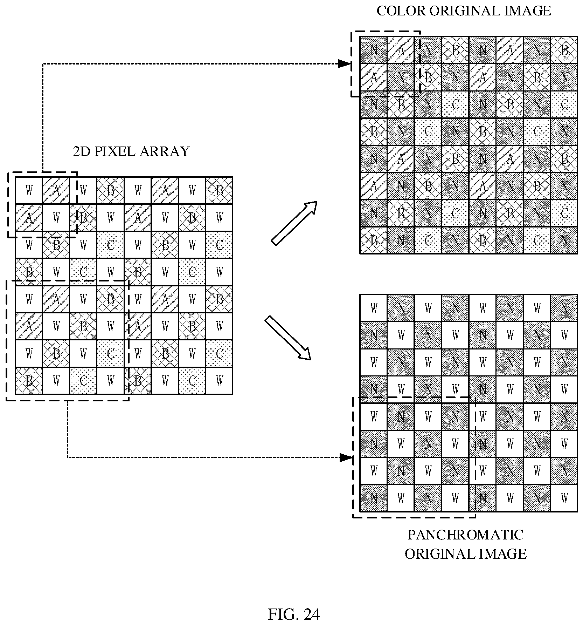

Specifically, with reference to FIG. 2 and FIG. 24, when a user requests for shooting, the vertical drive unit 12 in the image sensor 10 may control the multiple panchromatic pixels and the multiple color pixels in the 2D pixel array to be exposed. The column processing unit 14 may read out a pixel value of each panchromatic pixel and a pixel value of each color pixel. Instead of fitting the pixel value of the panchromatic pixel to the pixel value of the color pixel, the image sensor 10 directly outputs the panchromatic original image according to the pixel values of the multiple panchromatic pixels and directly outputs the color original image according to the pixel values of the multiple color pixels.

As illustrated in FIG. 24, the panchromatic original image includes multiple panchromatic pixels W and multiple empty pixels N (NULL), where the empty pixel is neither a panchromatic pixel nor a color pixel. A position of the empty pixel N in the panchromatic original image can be considered to have no pixel, or a pixel value of the empty pixel can be regarded as zero. As can be seen from comparison between the 2D pixel array and the panchromatic original image, for each sub-unit in the 2D pixel array, the sub-unit includes two panchromatic pixels W and two color pixels (color pixel A, color pixel B, or color pixel C). The panchromatic original image also includes a sub-unit corresponding to each sub-unit in the 2D pixel array. The sub-unit in the panchromatic original image includes two panchromatic pixels and two empty pixels N, where the two empty pixels N locate at positions corresponding to two color pixels in the sub-unit in the 2D pixel array.

Similarly, the color original image includes multiple color pixels and multiple empty pixels N, where the empty pixel is neither a panchromatic pixel nor a color pixel. A position of the empty pixel N in the color original image can be considered to have no pixel, or a pixel value of the empty pixel can be regarded as zero. As can be seen from comparison between the 2D pixel array and the color original image, for each sub-unit in the 2D pixel array, the sub-unit includes two panchromatic pixels W and two color pixels. The color original image also includes a sub-unit corresponding to each sub-unit in the 2D pixel array. The sub-unit in the color original image includes two color pixels and two empty pixels N, where the two empty pixels N locate at positions corresponding to panchromatic color pixels in the sub-unit in the 2D pixel array.

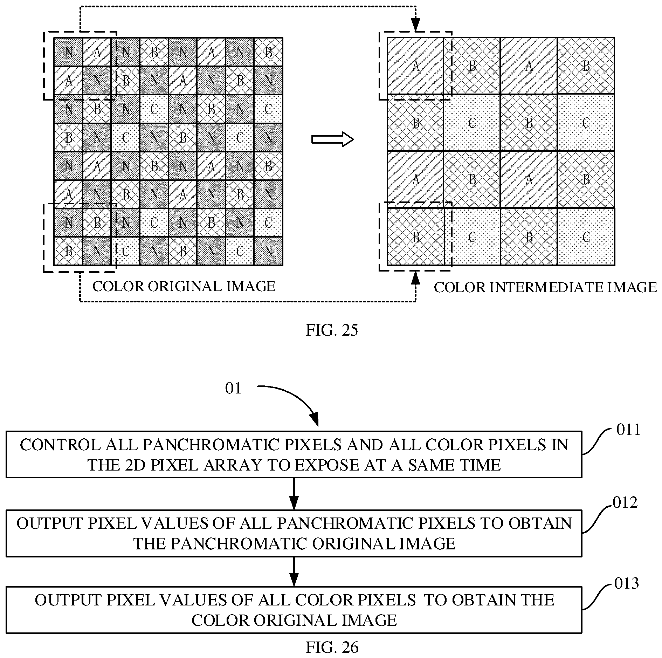

After the processing chip 20 receives the panchromatic original image and the color original image outputted by the image sensor 10, the processing chip 20 can further process the panchromatic original image to obtain the panchromatic intermediate image, and further process the color original image to obtain the color intermediate image. For example, the color original image can be transformed into the color intermediate image in a manner as illustrated in FIG. 25. As illustrated in FIG. 25, the color original image includes multiple sub-units, and each sub-unit includes multiple empty pixels N and multiple color pixels of single color (also called monochromatic pixels). Specifically, some sub-units include two empty pixels N and two monochromatic pixels A, some sub-units include two empty pixels N and two monochromatic pixels B, and some sub-units include two empty pixels N and two monochromatic pixels C. The processing chip 20 may assign all pixels in the sub-unit including the empty pixels N and the monochromatic pixels A as the monochromatic large pixel A corresponding to a single color A in the sub-unit, assign all pixels in the sub-unit including the empty pixels N and the monochromatic pixels B as the monochromatic large pixel B corresponding to a single color B in the sub-unit, and assign all pixels in the sub-unit including the empty pixels N and the monochromatic pixels C as the monochromatic large pixel C corresponding to a single color C in the sub-unit. As such, the processing chip can form the color intermediate image according to multiple monochromatic large pixels A, multiple monochromatic large pixels B, and multiple monochromatic large pixels C. If the color original image including multiple empty pixels N is regarded as an image with a second resolution, the color intermediate image obtained according to the manner illustrated in FIG. 25 is an image with a first resolution, where the first resolution is less than the second resolution. After the processing chip 20 obtains the panchromatic intermediate image and the color intermediate image, the panchromatic intermediate image and/or the color intermediate image may be further processed to obtain the target image. Specifically, the processing chip 20 may only process the panchromatic intermediate image to obtain the target image. Alternatively, the processing chip 20 may also only process the color intermediate image to obtain the target image. Alternatively, the processing chip 20 may process the panchromatic intermediate image and the color intermediate image at the same time to obtain the target image. The processing chip 20 can determine the processing of the two intermediate images according to actual requirements.

To sum up, in the image capturing method in the implementations of the present application, the image sensor 10 can directly output the panchromatic original image and the color original image. The subsequent processing of the panchromatic original image and the color original image is performed by the processing chip 20. As such, operation of fitting the pixel value of the panchromatic pixel W to the pixel value of the color pixel can be avoided in the image sensor 10, and the computation amount in the image sensor 10 can be reduced. In addition, there is no need to add new hardware to the image sensor 10 to support image processing in the image sensor 10, which can simplify design of the image sensor 10.

In some implementations, the step 01 of controlling to expose the 2D pixel array to obtain the panchromatic original image and the color original image may be implemented in a variety of manners.

Referring to FIG. 26, in one example, the step 01 includes the following.
At 011, all panchromatic pixels and all color pixels in the 2D pixel array are controlled to expose at a same time.
At 012, pixel values of all panchromatic pixels are outputted to obtain the panchromatic original image.
At 013, pixel values of all color pixels are outputted to obtain the color original image.

Referring to FIG. 1, the steps 011, 012, and 013 can be implemented by the image sensor 10. That is, all panchromatic pixels and color pixels in the image sensor 10 are exposed at the same time. The image sensor 10 can output the pixels values of all panchromatic pixels to obtain the panchromatic original image, and output the pixels values of all color pixels to obtain the color original image.

Referring to FIG. 2 and FIG. 3, the panchromatic pixels and the color pixels can be exposed at the same time. An exposure duration for the panchromatic pixels may be shorter than or equal to an exposure duration for the color pixels. Specifically, on condition that a first exposure duration for the panchromatic pixels is equal to a second exposure duration for the color pixels, an exposure start time and an exposure end time for the panchromatic pixels are the same as an exposure start time and an exposure end time for the color pixels respectively. On condition that the first exposure duration is shorter than the second exposure duration, the exposure start time for the panchromatic pixels is later than or the same as the exposure start time for the color pixels, and the exposure end time for the panchromatic pixels is earlier than the exposure end time for the color pixels. Alternatively, on condition that the first exposure duration is shorter than the second exposure duration, the exposure start time for the panchromatic pixels is later than the exposure start time for the color pixels, and the exposure end time for the panchromatic pixels is earlier than or the same as the exposure end time for the color pixels. After exposure of the panchromatic pixels and the color pixels is completed, the image sensor 10 outputs the pixel values of all the panchromatic pixels to obtain the panchromatic original image, and outputs the pixel values of all the color pixels to obtain the color original image. The panchromatic original image can be outputted before the color original image. Alternatively, the color original image can be outputted before the panchromatic original image. Alternatively, the panchromatic original image and the color original image can be outputted at the same time. An output order is not limited herein. Simultaneous exposure of panchromatic pixels and color pixels can reduce an acquisition time of panchromatic original image and color original image, and speed up the process of obtaining the panchromatic original image and the color original image. The simultaneous exposure of panchromatic pixels and color pixels has great advantages in a fast shooting mode, a continuous shooting mode, and other modes that require a higher image output speed.

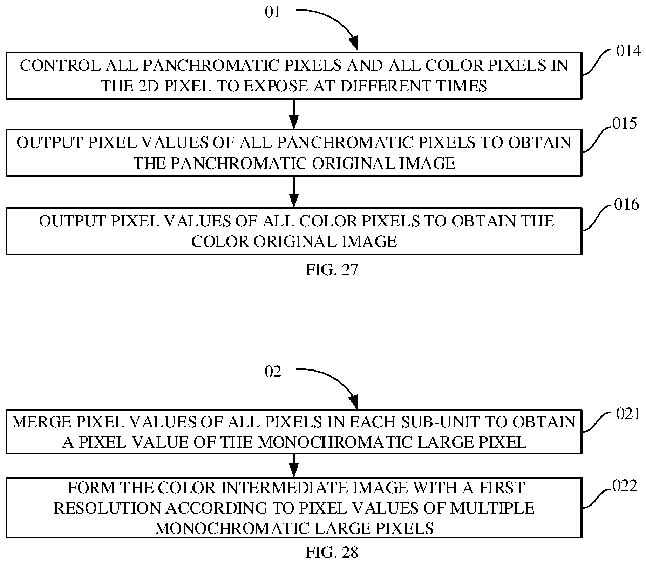

Referring to FIG. 27, in another example, the step 01 includes the following.
At 014, all panchromatic pixels and all color pixels in the 2D pixel are controlled to expose at different times.
At 015, pixel values of all panchromatic pixels are outputted to obtain the panchromatic original image.
At 016, pixel values of all color pixels are outputted to obtain the color original image.

Referring to FIG. 1, the steps 014, 015, and 016 may be implemented by the image sensor 10. That is, all panchromatic pixels and color pixels in the image sensor 10 are exposed at different times. The image sensor 10 can output the pixels values of all panchromatic pixels to obtain the panchromatic original image, and output the pixels values of all color pixels to obtain the color original image.

Specifically, the panchromatic pixels and the color pixels may be exposed at different times, where an exposure duration for the panchromatic pixels may be shorter than or equal to an exposure duration for the color pixels. Specifically, regardless of whether the first exposure duration is equal to the second exposure duration, the panchromatic pixels and the color pixels may be exposed at different times as follow: (1) all panchromatic pixels are exposed for the first exposure duration, and after exposure of all panchromatic pixels is completed, all color pixels are exposed for the second exposure duration; (2) all color pixels are exposed for the second exposure duration, and after exposure of all color pixels is completed, all panchromatic pixels are exposed for the first exposure duration. After exposure of panchromatic pixels and color pixels is completed, the image sensor 10 outputs the pixel values of all the panchromatic pixels to obtain the panchromatic original image, and outputs the pixel values of all the color pixels to obtain the color original image. The panchromatic original image and the color original image may be outputted as follows: (1) on condition that the panchromatic pixels are exposed prior to the color pixels, the image sensor 10 may output the panchromatic original image during exposure of the color pixels, or output sequentially the panchromatic original image and the color original image after the exposure of the color pixels is completed; (2) on condition that the color pixels are exposed prior to the panchromatic pixels, the image sensor 10 may output the color original image during exposure of the panchromatic pixels, or output sequentially the color original image and the panchromatic original image after the exposure of the panchromatic pixels is completed; (3) regardless of which of the panchromatic pixels and the color pixels are exposed first, the image sensor 10 may output the panchromatic original image and the color original image at the same time after exposure of all pixels is completed. In this example, the control logic for the exposure of panchromatic pixels and color pixels at different times is relatively simple.

The image sensor 10 may have both the functions of controlling the exposure of panchromatic pixels and color pixels at the same time and controlling the exposure of panchromatic pixels and color pixels at the different times as illustrated in FIGS. 26 and 27. The specific exposure manner used by the image sensor 10 in the process of image capturing can be selected according to actual needs. For example, in the fast shooting mode, the continuous shooting mode, or other modes, simultaneous exposure can be used to meet the requirement on fast image output, while in ordinary shooting modes, exposure at different times can be used to simplify the control logic.

In the two examples illustrated in FIG. 26 and FIG. 27, an exposure order of panchromatic pixels and color pixels can be controlled by the control unit 13 in the image sensor 10.

In the two examples illustrated in FIGS. 26 and 27, the exposure duration for the panchromatic pixels can be controlled by a first exposure signal, and the exposure duration for the color pixels can be controlled by a second exposure signal.

Specifically, with reference to FIG. 3, as an example, the image sensor 10 may control, with the first exposure signal, at least two adjacent panchromatic pixels in a first diagonal direction to expose for the first exposure duration, and control, with the second exposure signal, at least two adjacent color pixels in a second diagonal direction to expose for the second exposure duration, where the first exposure duration may be shorter than or equal to the second exposure duration. Specifically, the vertical drive unit 12 in the image sensor 10 transmits the first exposure signal through the first exposure control line TX1 to control at least two adjacent panchromatic pixels in the first diagonal direction to expose for the first exposure duration, and the vertical drive unit 12 transmits the second exposure signal through the second exposure control signal TX2 to control at least two adjacent color pixels in the second diagonal direction to expose for the second exposure duration. After exposure of all panchromatic pixels and all color pixels is completed, as illustrated in FIG. 24, instead of fitting the pixel values of the multiple panchromatic pixels to the pixel values of the color pixels, the image sensor 10 directly outputs the panchromatic original image and the color original image.

With reference to FIG. 2 and FIG. 6, as another example, the image sensor 10 may control, with the first exposure signal, panchromatic pixels in a (2n-1)-th row and a 2n-th row to expose for the first exposure duration, and control, with the second exposure signal, color pixels in the (2n-1)-th row and the 2n-th row to expose for the second exposure duration, where the first exposure duration may be shorter than or equal to the second exposure duration. Specifically, the first exposure control line TX1 is coupled with control terminals TG in all panchromatic pixels in the (2n-1)-th row and the 2n-th row, and the second exposure control line TX2 is coupled with control terminals in all color pixels in the (2n-1)-th row and the 2n-th row. The vertical drive unit 12 transmits the first exposure signal through the first exposure control line TX1 to control the panchromatic pixels in the (2n-1)-th row and the 2n-th row to expose for the first exposure duration, and transmits the second exposure signal through the second exposure control line TX2 to control the color pixels in the (2n-1)-th row and the 2n-th row to expose for the second exposure duration. After exposure of all panchromatic pixels and all color pixels is completed, as illustrated in FIG. 24, instead of fitting the pixel values of the multiple panchromatic pixels to the pixel values of the color pixels, the image sensor 10 directly outputs the panchromatic original image and the color original image.

In some implementations, the processing chip 20 may determine a relative relationship between the first exposure duration and the second exposure duration according to ambient brightness. For example, the image sensor 10 may first control the panchromatic pixels to expose and output the panchromatic original image, and then the processing chip 20 analyzes the pixels values of multiple panchromatic pixels in the panchromatic original image to determine the ambient brightness. In case that the ambient brightness is less than or equal to a brightness threshold, the image sensor 10 controls the panchromatic pixels to expose for the first exposure duration that is equal to the second exposure duration. In case that the ambient brightness is greater than the brightness threshold, the image sensor 10 controls the panchromatic pixels to expose for the first exposure duration that is less than the second exposure duration. The relative relationship between the first exposure duration and the second exposure duration may be determined according to a brightness difference between the ambient brightness and the brightness threshold in case that the ambient brightness is greater than the brightness threshold. For example, the greater the brightness difference, the smaller the ratio of the first exposure duration to the second exposure duration. For example, when the brightness difference is within a first range [a,b), the ratio of the first exposure duration to the second exposure duration is 1:2; when the brightness difference is within a second range [b,c), the ratio of the first exposure duration to the second exposure duration is 1:3; and when the brightness difference is greater than or equal to c, the ratio of the first exposure duration to the second exposure duration is 1:4.

Referring to FIG. 28, in some implementations, the step 02 includes the following.
At 021, pixel values of all pixels in each sub-unit are merged to obtain a pixel value of the monochromatic large pixel.
At 022, the color intermediate image with a first resolution is formed according to pixel values of multiple monochromatic large pixels.

Referring to FIG. 1, in some implementations, the steps 021 and 022 may be implemented by the processing chip 20. That is, the processing chip 20 may be configured to merge the pixel values of all pixels in each sub-unit to obtain the pixel value of the monochromatic large pixel, and form the color intermediate image with the first resolution according to the pixel values of multiple monochromatic large pixels, where the color intermediate image has the first resolution.

Specifically, as illustrated in FIG. 25, for monochromatic large pixel A, the processing chip 20 may perform addition on pixel values of all pixels in a sub-unit including empty pixels N and monochromatic pixels A, and assign an addition result as a pixel value of monochromatic large pixel A corresponding to the sub-unit. The pixel value of the empty pixel N may be regarded as zero herein. The processing chip 20 may perform addition on pixel values of all pixels in a sub-unit including empty pixels N and monochromatic pixels B, and assign an addition result as a pixel value of monochromatic large pixel B corresponding to the sub-unit. The processing chip 20 may perform addition on pixel values of all pixels in a sub-unit including empty pixels N and monochromatic pixels C, and assign an addition result as a pixel value of monochromatic large pixel C corresponding to the sub-unit. As such, the processing unit 20 may obtain pixel values of multiple monochromatic large pixels A, pixel values of multiple monochromatic large pixels B, and pixel values of multiple monochromatic large pixels C. The processing unit 20 then forms the color intermediate image according to the pixel values of multiple monochromatic large pixels A, the pixel values of multiple monochromatic large pixels B, and the pixel values of multiple monochromatic large pixels C. As illustrated in FIG. 25, when the single color A is red R, the single color B is green G, and the single color C is blue Bu, the color intermediate image is an image arranged in a Bayer array. Of course, the manner in which the processing chip 20 obtains the color intermediate image is not limited to this.

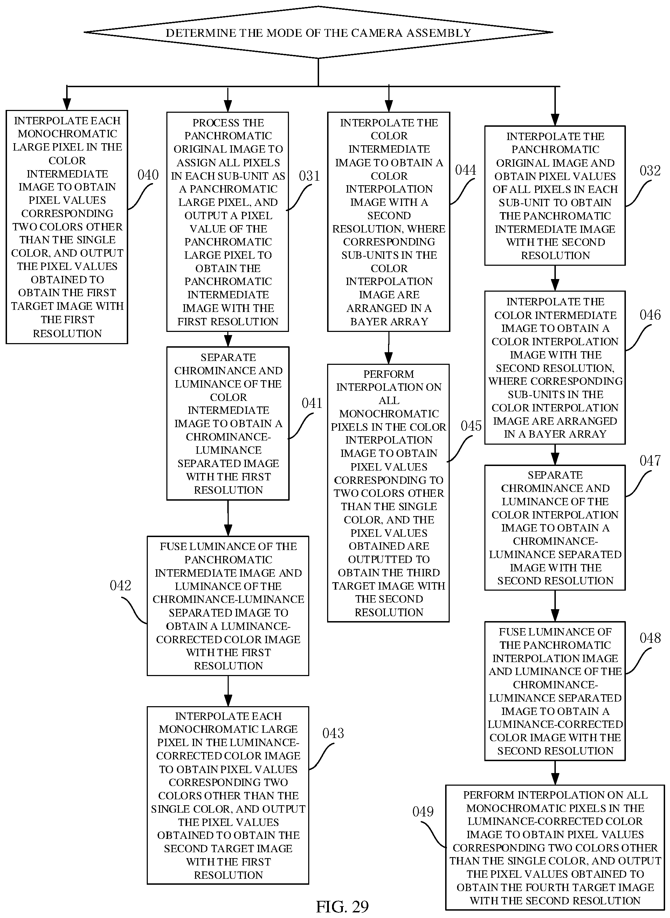

In some implementations, with reference to FIG. 1 and FIG. 29, when the camera assembly 40 is in different modes, the different modes each correspond to a different target image. The processing chip 20 may first determine that the camera assembly 40 is in which mode, and then process correspondingly the color intermediate image and/or the panchromatic intermediate image according to the mode of the camera assembly 40 to obtain the target image corresponding to the mode. The target image includes at least four kinds of target images: a first target image, a second target image, a third target image, and a fourth target image. The mode of the camera assembly 40 may at least include the following. (1) When the mode is a preview mode, the target image in the preview mode may be the first target image or the second target image. (2) When the mode is an imaging mode, the target image in the imaging mode may be the second target image, the third target image, or the fourth target image. (3) When the mode is the preview mode and a low power consumption mode, the target image is the first target image. (4) When the mode is the preview mode and a non-low power consumption mode, the target image is the second target image. (5) When the mode is the imaging mode and the low power consumption mode, the target image is the second target image or the third target image. (6) When the mode is the imaging mode and the non-low power consumption mode, the target image is the fourth target image.

Referring to FIG. 29, in one example, when the target image is the first target image, the step 04 includes the following.
At 040, interpolation is performed on each monochromatic large pixel in the color intermediate image to obtain pixel values corresponding two colors other than the single color, and the pixel values obtained are outputted to obtain the first target image with the first resolution.

Referring to FIG. 1, the step 040 may be implemented by the processing chip 20. That is, the processing chip 20 may perform interpolation on each monochromatic large pixel in the color intermediate image to obtain the pixel values corresponding two colors other than the single color and output the pixel values obtained, to obtain the first target image with the first resolution.

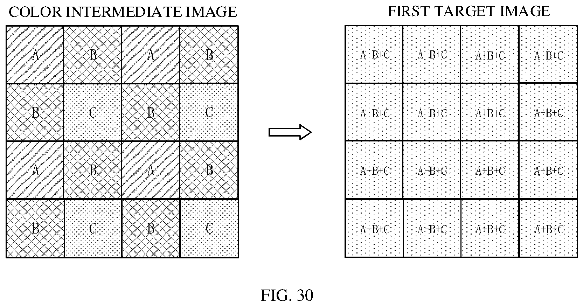

Specifically, with reference to FIG. 30, assuming that the monochromatic large pixel A is the red pixel R, the monochromatic large pixel B is the green pixel G, and the monochromatic large pixel C is the blue pixel Bu, then the color intermediate image is the image arranged in the Bayer array. The processing chip 20 may perform demosaicing (that is, interpolation) on the color intermediate image, so that the pixel value of each monochromatic large pixel has three components of R, G, and B at the same time. For example, for each monochromatic large pixel, a linear interpolation method may be used to calculate pixel values of two colors other than the single color of the monochromatic large pixel. Taking monochromatic large pixel C_{2,2}("C_{2,2}" represents a pixel C in the second row and the second column from the upper left) as an example, monochromatic large pixel C_{2,2} has only a pixel value P(C_{2,2}) of color C component, and a pixel value P(A_{2,2}) of color A and a pixel value P(B_{2,2}) of color B at the monochromatic large pixel C need to be calculated. In one example, P(A_{2,2}) = α₁·P(A_{3,1})+ α₂·P(A_{3,3})+α₃·P(A_{1,3})+ (α₄·P(A_{1,1}), P(B_{2,2}) = β₁·P(B_{1,2})+ β₂·P(B_{2,1})+ β₃·P(B_{2,3})+β₄·P(B_{3,2}), where α_{1~}α₄ and β_{1~}β₄ are interpolation coefficients, and α₁+ a₂+a₃+ α₄=1, β₁+ β₂+β₃+ β₄=1. The calculation method of P(A_{2,2}) and P(B_{2,2}) above is only an example. P(A_{2,2}) and P(B_{2,2}) can also be calculated with other interpolation methods besides linear interpolation, which is not limited herein.

After the processing chip 20 calculates the pixel values of three components of each monochromatic large pixel, final pixel values corresponding to the monochromatic large pixel can be calculated based on the three pixel values, namely A+B+C. It should be noted that A+B+C does not mean that the final pixel values of the monochromatic large pixel are obtained by directly adding the three pixel values, but only represents that the monochromatic large pixel includes the three color components of A, B, and C. The processing chip 20 can form the first target image according to the final pixel values of multiple monochromatic large pixels. Since the color intermediate image has the first resolution, the first target image is obtained by performing interpolation on the color intermediate image, and the processing chip 20 does not interpolate the color intermediate image, then the first target image also has the first resolution. The processing algorithm for the processing chip 20 to process the color intermediate image to obtain the first target image is relatively simple, and the processing speed is relatively fast. The camera assembly 40 uses the first target image as the preview image when the mode is both the preview mode and the low power consumption mode, which can not only meet the requirement of the preview mode for the image output speed, but also save the power consumption of the camera assembly 40.

Referring to FIG. 29, in another example, when the target image is the second target image, the step 03 includes the following.
At 031, the panchromatic original image is processed to assign all pixels in each sub-unit as a panchromatic large pixel, and a pixel value of the panchromatic large pixel is outputted to obtain the panchromatic intermediate image with the first resolution.

The step 04 includes the following.
At 041, chrominance and luminance of the color intermediate image are separated to obtain a chrominance-luminance separated image with the first resolution.
At 042, luminance of the panchromatic intermediate image and luminance of the chrominance-luminance separated image are fused to obtain a luminance-corrected color image with the first resolution.
At 043, interpolation is performed on each monochromatic large pixel in the luminance-corrected color image to obtain pixel values corresponding two colors other than the single color, and the pixel values obtained are outputted to obtain the second target image with the first resolution.

Referring to FIG. 1, the steps 031, 041, 042, and 043 may be implemented by the processing chip 20. That is, the processing chip 20 may be configured to process the panchromatic original image to assign all pixels in each sub-unit as the panchromatic large pixel, and output the pixel value of the panchromatic large pixel to obtain the panchromatic intermediate image with the first resolution. The processing chip 20 may be further configured to separate chrominance and luminance of the color intermediate image to obtain the chrominance-luminance separated image with the first resolution, fuse luminance of the panchromatic intermediate image and luminance of the chrominance-luminance separated image to obtain the luminance-corrected color image with the first resolution, and perform interpolation on each monochromatic large pixel in the luminance-corrected color image to obtain pixel values corresponding two colors other than the single color and output the pixel values obtained, to obtain the second target image with the first resolution.

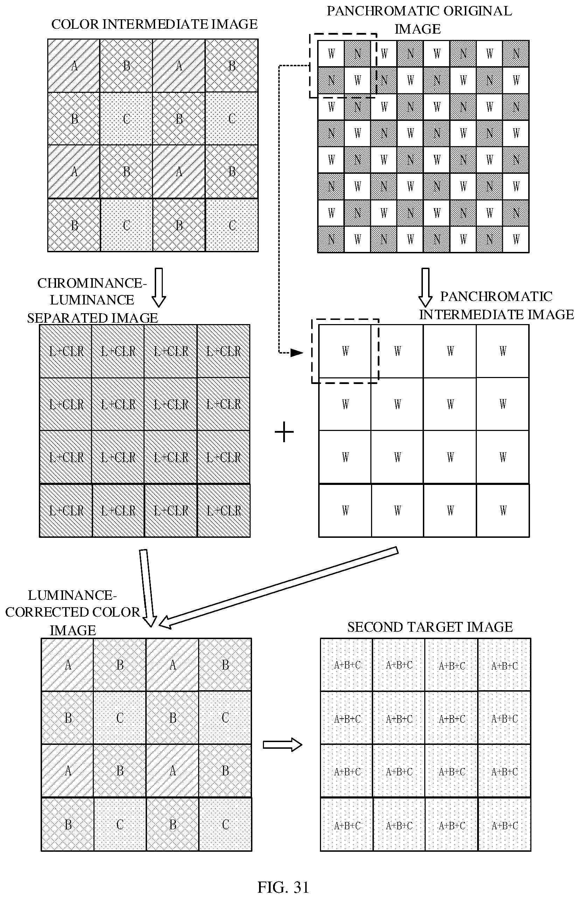

Specifically, the panchromatic original image can be transformed into the panchromatic intermediate image in a manner illustrated in FIG. 31. As illustrated in FIG. 31, the panchromatic original image includes multiple sub-units, and each sub-unit includes two empty pixels N and two panchromatic pixels W. The processing chip 20 may assign all pixels in each sub-unit including the empty pixels N and the panchromatic pixels W as the panchromatic large pixel W corresponding to the sub-unit. In this way, the processing chip 20 can form the panchromatic intermediate image based on multiple panchromatic large pixels W. If the panchromatic original image including multiple empty pixels N is regarded as an image with the second resolution, the panchromatic intermediate image obtained in the manner illustrated in FIG. 31 is an image with the first resolution, where the first resolution is smaller than the second resolution.

As an example, the processing chip 20 may assign all pixels in each sub-unit in the panchromatic original image as the panchromatic large pixel W corresponding to the sub-unit as follows. The processing chip 20 first merges the pixel values of all pixels in each sub-unit to obtain the pixel value of the panchromatic large pixel W, and then forms the panchromatic intermediate image according to the pixel values of the multiple panchromatic large pixels W. Specifically, for each panchromatic large pixel, the processing chip 20 may perform addition on all the pixel values in the sub-unit including the empty pixels N and the panchromatic pixels W, and an addition result is regarded as the pixel value of panchromatic large pixel W corresponding to the sub-unit. The pixel value of the empty pixel N can be regarded as zero. In this way, the processing chip 20 can obtain the pixel values of multiple panchromatic large pixels W.

After the processing chip 20 obtains the panchromatic intermediate image and the color intermediate image, the processing chip 20 may fuse the panchromatic intermediate image and the color intermediate image to obtain the second target image.

For example, as illustrated in FIG. 31, the processing chip 20 first separate chrominance and luminance of the color intermediate image to obtain the chrominance-luminance separated image. In FIG. 31, Lin the chrominance-luminance separated image represents luminance, and CLR represents chrominance. Specifically, assume that monochromatic pixel A is the red pixel R, monochromatic pixel B is the green pixel G, and monochromatic pixel C is the blue pixel Bu. Then, (1) the processing chip 20 may convert the color intermediate image in RGB space into the chrominance-luminance separated image in YCrCb space, where Y in YCrCb represents luminance L in the chrominance-luminance separated image, and Cr and Cb in YCrCb represent chrominance CLR in the chrominance-luminance separated image; (2) the processing chip 20 may also convert the color intermediate image in RGB space into the chrominance-luminance separated image in Lab space, where L in Lab represents luminance L in the chrominance-luminance separated image, and a and b in Lab represent chrominance CLR in the chrominance-luminance separated image. It should be noted that L+CLR in the chrominance-luminance separated image illustrated in FIG. 31 does not mean that the pixel value of each pixel is formed by adding L and CLR, but only represents that the pixel value of each pixel is composed of L and CLR.

Subsequently, the processing chip 20 fuses the luminance of the chrominance-luminance separated image and the luminance of the panchromatic intermediate image. For example, the pixel value of each panchromatic pixel W in the panchromatic intermediate image is the luminance value of each panchromatic pixel. The processing chip 20 can add L of each pixel in the chrominance-luminance separated image and W of the panchromatic pixel in the corresponding position in the panchromatic intermediate image to obtain the luminance-corrected pixel value. The processing chip 20 forms the chrominance-luminance separated image after luminance correction according to multiple luminance-corrected pixel values, and then uses color space conversion to convert the chrominance-luminance separated image after luminance correction into the luminance-corrected color image.

In a case that monochromatic large pixel A is the red pixel R, monochromatic large pixel B is the green pixel G, and monochromatic large pixel C is the blue pixel Bu, the luminance-corrected color image is the image arranged in the Bayer array. The processing chip 20 may perform interpolation on the luminance-corrected color image, so that luminance-corrected pixel value of each monochromatic large pixel has three components of R, G, and B. The processing chip 20 may perform interpolation on the luminance-corrected color image to obtain the second target image. For example, linear interpolation may be used to obtain the second target image. The process of linear interpolation is similar to the interpolation process described in step 40, which will not be repeated herein.

Since the luminance-corrected color image has the first resolution, the second target image is obtained by performing interpolation on the luminance-corrected color image, and the processing chip 20 does not interpolate the luminance-corrected color image, then the second target image has also the first resolution. Since the second target image is obtained by fusing the luminance of the color intermediate image and the luminance of the panchromatic intermediate image, the second target image has a better imaging effect. When the mode is the preview mode and the non-low power consumption mode, using the second target image as the preview image can improve a preview effect of the preview image. When the mode is the imaging mode and the low power consumption mode, by using the second target image as the image provided to the user, since the second target image is obtained without calculation process of interpolation, the power consumption of the camera assembly 40 may be reduce to some extent, and usage requirements in the low power consumption mode can be satisfied. In addition, the second target image has a higher luminance, which can meet the requirement of the user for the luminance of the target image.

Referring to FIG. 29, in another example, when the target image is the third target image, the step 04 includes the following.
At 044, the color intermediate image is interpolated to obtain a color interpolated image with a second resolution, where corresponding sub-units in the color interpolated image are arranged in a Bayer array, and the second resolution is greater than the first resolution.
At 045, interpolation is performed on all monochromatic pixels in the color interpolated image to obtain pixel values corresponding to two colors other than the single color, and the pixel values obtained are outputted to obtain the third target image with the second resolution.

Referring to FIG. 1, the steps 044 and 045 may be implemented by the processing chip 20. That is, the processing chip 20 may be configured to interpolate the color intermediate image to obtain the color interpolated image with the second resolution, where corresponding sub-units in the color interpolated image are arranged in the Bayer array, and the second resolution is greater than the first resolution. The processing unit 20 may be further configured to perform interpolation on all monochromatic pixels in the color interpolated image to obtain pixel values corresponding to two colors other than the single color, and output the pixel values obtained, to obtain the third target image with the second resolution.

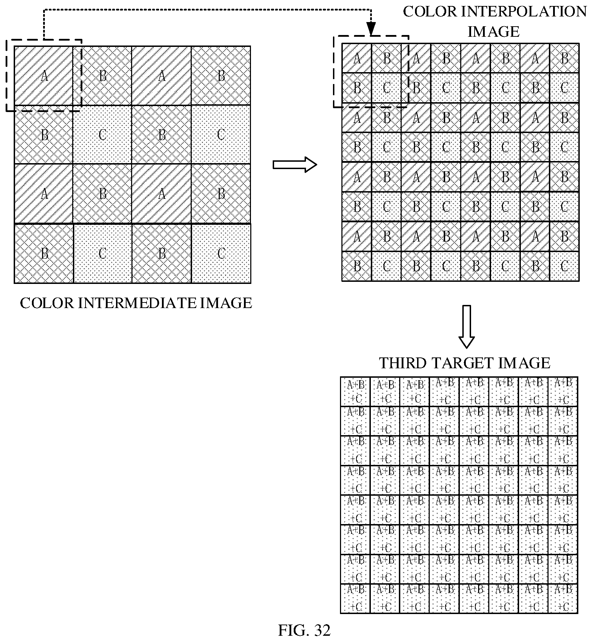

Specifically, with reference to FIG. 32, the processing chip 20 splits each monochromatic large pixel in the color intermediate image into four color pixels. The four color pixels form a sub-unit in the color interpolated image. Each sub-unit includes color pixels in three colors, which are one color pixel A, two color pixels B, and one color pixel C. In case that the color pixel A is a red pixel R, the color pixel B is a green pixel G, and the color pixel C is a blue pixel Bu, the multiple color pixels in each sub-unit are arranged in the Bayer array. Thus, the color interpolated image including multiple sub-units is the image arranged in the Bayer array. The processing chip 20 can perform interpolation on the color interpolated image to obtain the third target image. For example, linear interpolation may be used to obtain the second target image. The process of linear interpolation is similar to the interpolation process described in step 040, which will not be repeated herein. The third target image is an image obtained through interpolation, and the resolution of the third target image (that is, the second resolution) is greater than the resolution of the color intermediate image (that is, the first resolution). When the mode is the preview mode and the non-low power consumption mode, using the third target image as the preview image can obtain a clearer preview image. When the mode is the imaging mode and the low power consumption mode, by using the third target image as the image provided to the user, since the third target image is formed without luminance fusion with the panchromatic intermediate image, the power consumption of the camera assembly 40 can be reduced to a certain extent, and at the same time, the requirement of the user for the clarity of the captured image can be satisfied.

Referring to FIG. 29, in another example, when the target image is the fourth target image, the step 03 includes the following.
At 032, the panchromatic original image is interpolated and pixel values of all pixels in each sub-unit are obtained to obtain the panchromatic intermediate image with the second resolution.

The step 04 includes the following.
At 046, the color intermediate image is interpolated to obtain a color interpolated image with the second resolution, where corresponding sub-units in the color interpolated image are arranged in a Bayer array, and the second resolution is greater than the first resolution.
At 047, chrominance and luminance of the color interpolated image are separated to obtain a chrominance-luminance separated image with the second resolution.
At 048, luminance of the panchromatic interpolated image and luminance of the chrominance-luminance separated image are fused to obtain a luminance-corrected color image with the second resolution.
At 049, interpolation is performed on all monochromatic pixels in the luminance-corrected color image to obtain pixel values corresponding two colors other than the single color, and the pixel values obtained are outputted to obtain the fourth target image with the second resolution.

Referring to FIG. 1, the steps 032, 046, 047, 048, and 049 may be implemented by the processing chip 20. That is, the processing chip 20 may be configured to interpolate the panchromatic original image and obtain pixel values of all pixels in each sub-unit to obtain the panchromatic intermediate image with the second resolution. The processing chip 20 may also be configured to interpolate the color intermediate image to obtain the color interpolated image with the second resolution, where corresponding sub-units in the color interpolated image are arranged in the Bayer array, and the second resolution is greater than the first resolution. The processing chip 20 may also be configured to separate chrominance and luminance of the color interpolated image to obtain the chrominance-luminance separated image with the second resolution, fuse luminance of the panchromatic interpolated image and luminance of the chrominance-luminance separated image to obtain the luminance-corrected color image with the second resolution, and perform interpolation on all monochromatic pixels in the luminance-corrected color image to obtain pixel values corresponding two colors other than the single color, and outputting the pixel values obtained, to obtain the fourth target image with the second resolution.

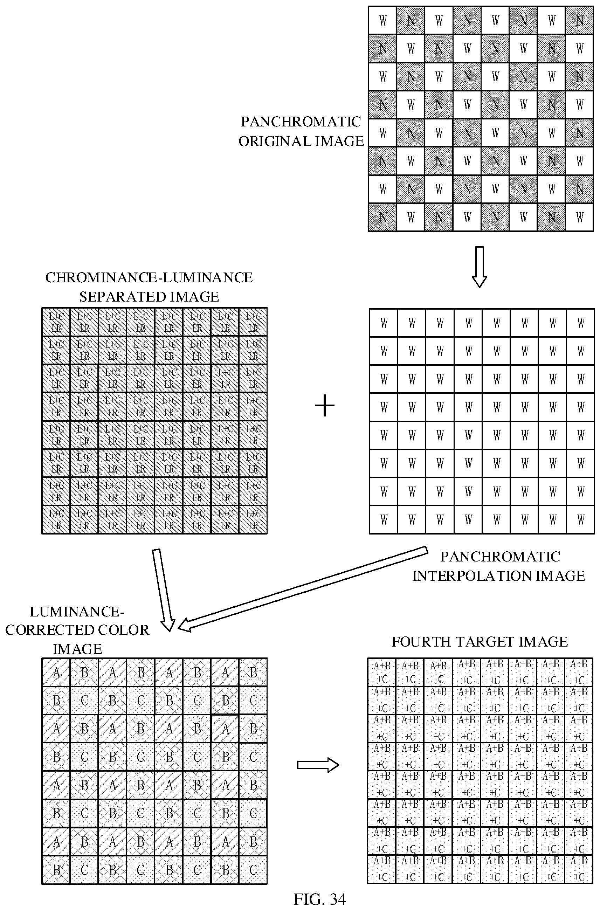

Specifically, the processing chip 20 first interpolates the panchromatic original image with the first resolution to obtain the panchromatic intermediate image with the second resolution. With reference to FIG. 34, the panchromatic original image includes multiple sub-units, and each sub-unit includes two empty pixels and two panchromatic pixels. The processing chip 20 needs to replace each empty pixel N in each sub-unit with a panchromatic pixel W, and after replacing, calculate a pixel value of each panchromatic pixel W at a location of the empty pixel N. For each empty pixel N, the processing chip 20 replaces the empty pixel N with a panchromatic pixel W, and determines the pixel value of the panchromatic pixel W according to pixel values of the remaining panchromatic pixels W adjacent to the panchromatic pixel W. Taking empty pixel N_{1,8} ("empty pixel N_{1,8}" is an empty pixel N in the first row and the eighth column from the upper left) in the panchromatic original image illustrated in FIG. 34 as an example, empty pixel N_{1,8} is replaced by panchromatic pixel W_{1,8}, and panchromatic pixel W_{1,7} and panchromatic pixel W_{2,8} in the panchromatic original image are adjacent to the panchromatic pixel W_{1,8}. For example, an average of a pixel value of panchromatic pixel W_{1,7} and a pixel value of panchromatic pixel W_{2,8} may be assigned as a pixel value of panchromatic pixel W_{1,8}. Taking empty pixel N_{2,3} in the panchromatic original image as illustrated in FIG. 34 as an example, empty pixel N_{2,3} is replaced by panchromatic pixel W_{2,3}, and panchromatic pixel W_{1,3}, panchromatic pixel W_{2,2}, panchromatic pixel W_{2,4}, and panchromatic pixel W_{3,3} in the panchromatic original image are adjacent to the panchromatic pixel W_{2,3}. For example, the processing unit 20 assigns an average of pixel values of panchromatic pixel W_{1,3}, panchromatic pixel W_{2,2}, panchromatic pixel W_{2,4}, and panchromatic pixel W_{3,3} as a pixel value of the replacing panchromatic pixel W_{2,3}.

After the processing chip 20 obtains the panchromatic intermediate image and the color intermediate image, the processing chip 20 may perform fusion on the panchromatic intermediate image and the color intermediate image to obtain the fourth target image.

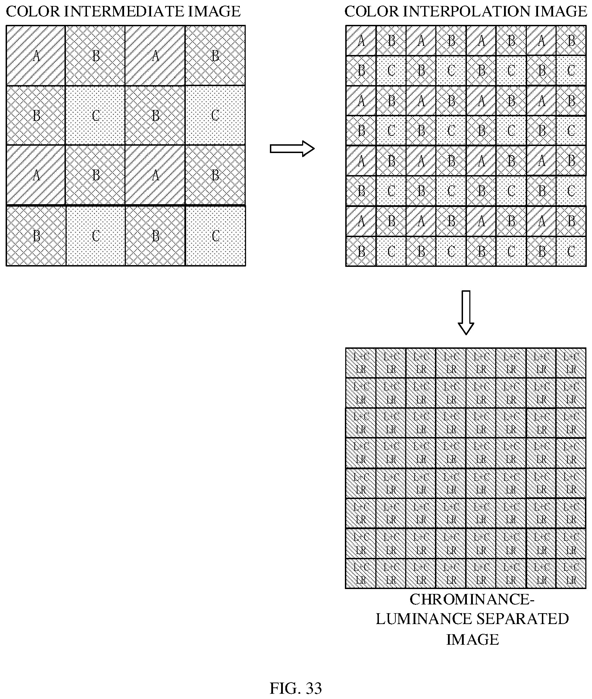

First, the processing chip 20 may interpolate the color intermediate image with the first resolution to obtain the color interpolated image with the second resolution, as illustrated in FIG. 33. The specific interpolation method is similar to the interpolation method in step 045, which will not be repeated herein.

Subsequently, as illustrated in FIG. 33, the processing chip 20 may separate chrominance and luminance of the color interpolated image to obtain the chrominance-luminance separated image. In the chrominance-luminance separated image of FIG. 33, L represents luminance, and CLR represents chrominance. Specifically, assuming that monochromatic pixel A is a red pixel R, monochromatic pixel B is a green pixel G, and monochromatic pixel C is a blue pixel Bu, then (1) the processing chip 20 may convert the color interpolated image in the RGB space into the chrominance-luminance separated image in the YCrCb space, where Y in YCrCb is the luminance L in the chrominance-luminance separated image, and Cr and Cb in YCrCb are chrominance CLR in the chrominance-luminance separated image; (2) the processing chip 20 may also convert the color interpolated image in RGB into the chrominance-luminance separated image in Lab space, where L in Lab is the luminance L in the chrominance-luminance separated image, and a and b in Lab are chrominance CLR in the chrominance-luminance separated image. It should be noted that the L+CLR in the chrominance-luminance separated image illustrated in FIG. 33 does not mean that pixel values of each pixel are formed by the addition of L and CLR, and only represents that pixel values of each pixel are composed of L and CLR.

Subsequently, as illustrated in FIG. 34, the processing chip 20 may fuse the luminance of the chrominance-luminance separated image and the luminance of the panchromatic intermediate image. For example, the pixel value of each panchromatic pixel W in the panchromatic intermediate image is the luminance value of each panchromatic pixel. The processing chip 20 can add L of each pixel in the chrominance-luminance separated image and W of the panchromatic pixel at the corresponding position in the panchromatic intermediate image to obtain the luminance-corrected pixel value. The processing chip 20 forms a chrominance-luminance separated image after luminance correction according to the multiple luminance-corrected pixel values, and then converts the chrominance-luminance separated image after luminance correction into the luminance-corrected color image with the second resolution.

In case that color pixel A is a red pixel R, color pixel B is a green pixel G, and color pixel C is a blue pixel Bu, the luminance-corrected color image is an image arranged in the Bayer array. The processing chip 20 may perform interpolation on the luminance-corrected color image, so that the pixel value of each color pixel after the luminance correction has three components of R, G, and B at the same time. The processing chip 20 may perform interpolation on the luminance-corrected color image to obtain the fourth target image. For example, linear interpolation may be used to obtain the fourth target image. The process of linear interpolation is similar to the interpolation process described in step 040, which will not be repeated herein.

Since the fourth target image is obtained by fusing the luminance of the color intermediate image and the luminance of the panchromatic intermediate image, and the fourth target image has a larger resolution, the fourth target image has better luminance and clarity. When the mode is the imaging mode and the non-low power consumption mode, using the fourth target image as the image provided to the user can meet the requirement of the user for the quality of the captured image.

In some implementations, the image capturing method may further includes obtaining ambient brightness. This step may be implemented by the processing chip 20, and the specific implementation is as described above, which will not be repeated herein. When the ambient brightness is greater than a brightness threshold, the first target image or the third target image may be used as the target image; when the ambient brightness is less than or equal to the brightness threshold, the second target image or the fourth target image may be used as the target image. It can be understood that when the ambient brightness is relatively high, the brightness of the first target image and the second target image obtained from only the color intermediate image is sufficient to meet the brightness requirement of the user for the target image. In this case, fusing the luminance of the panchromatic intermediate image to improve the brightness of the target image can be avoided, so that not only the computation amount of the processing chip 20 can be reduced, but also the power consumption of the camera assembly 40 can be reduced. When the ambient brightness is relatively low, the brightness of the first target image and the second target image obtained from only the color intermediate image may not meet the requirement of the user for the brightness of the target image, and the second target image or the fourth target image obtained by fusing the luminance of the panchromatic intermediate image is used as the target image, which can increase the brightness of the target image.

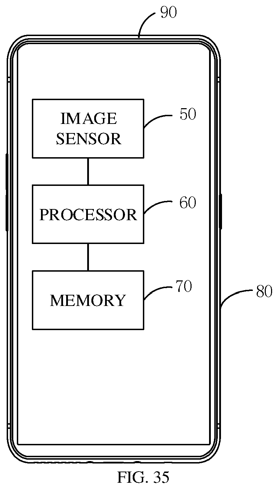

Referring to FIG. 35, the present application also provides a mobile terminal 90. The mobile terminal 90 may be a mobile phone, a tablet computer, a notebook computer, a smart wearable device (such as a smart watch, a smart bracelet, a pair of smart glasses, a smart helmet, etc.), a head-mounted display device, a virtual reality device, etc., which are not limited herein.

The mobile terminal 90 includes an image sensor 50, a processor 60, a memory 70, and a housing 80, and the image sensor 50, the processor 60, and the memory 70 are all installed in the housing 80. The image sensor 50 is coupled with the processor 60. The image sensor 50 may be the image sensor 10 (illustrated in FIG. 1) described in any of the foregoing implementations. The processor 60 can perform the same functions as the processing chip 20 in the camera assembly 40 (illustrated in FIG. 1). In other words, the processor 60 can implement the functions that can be implemented by the processing chip 20 described in any of the foregoing implementations. The memory 70 is coupled with the processor 60 and can store data obtained after processing by the processor 60, such as a target image. The processor 60 and the image sensor 50 may be mounted on a same substrate. In this case, the image sensor 50 and the processor 60 can be regarded as the camera assembly 40. Of course, the processor 60 and the image sensor 50 may also be mounted on different substrates.

In the mobile terminal 90 of the present application, the image sensor 50 can directly output the panchromatic original image and the color original image. The subsequent processing of the panchromatic original image and the color original image is performed by the processor 60. As such, operation of fitting the pixel value of the panchromatic pixel W to the pixel value of the color pixel can be avoided in the image sensor 50, and the computation amount in the image sensor 50 can be reduced. In addition, there is no need to add new hardware to the image sensor 50 to support image processing in the image sensor 50, which can simplify design of the image sensor 50.

In the description of this specification, the description with reference to the terms "one implementation", "some implementations", "exemplary implementations", "examples", "specific examples", "some examples" or the like means that specific features, structures, materials or characteristics described in combination with the implementations or examples are included in at least one implementation or example of the present application. In this specification, the schematic representations of the above-mentioned terms do not necessarily refer to the same implementation or example. Moreover, the described specific features, structures, materials or characteristics can be combined in any one or more implementations or examples in a suitable manner. In addition, those skilled in the art can incorporate and combine the different implementations or examples and the features of the different implementations or examples described in this specification in case of no conflict.

It should be understood by those skilled in the art to which the implementations of this application belong that, any process or method described in the flowchart or in other ways herein can be understood as a module, segment, or portion of codes that represent executable instructions including one or more steps for implementing specific logical functions or processes, and the scope of the preferred implementations of the present application includes additional implementations, in which functions may be performed irrespective of the order illustrated or discussed, including in a substantially simultaneous manner or in a reverse order according to the functions involved.

Although the implementations of the present application have been illustrated and described above, it can be understood that the above implementations are exemplary and should not be construed as limitations on this application. Those of ordinary skill in the art can make changes, modifications, substitutions, and modifications to the above-mentioned implementations within the scope of the present application.

## Claims

1. An image capturing method for an image sensor, the image sensor comprising a two-dimensional (2D) pixel array, the 2D pixel array comprising a plurality of panchromatic pixels and a plurality of color pixels, the 2D pixel array comprising minimal repeating units, each minimal repeating unit comprising a plurality of sub-units, each sub-unit comprising a plurality of monochromatic pixels and a plurality of panchromatic pixels, the image capturing method comprising:
controlling to expose the 2D pixel array to obtain a panchromatic original image and a color original image;
processing the color original image to assign all pixels in each sub-unit as a monochromatic large pixel corresponding to a single color in the sub-unit, and outputting a pixel value of the monochromatic large pixel to obtain a color intermediate image;
processing the panchromatic original image to obtain a panchromatic intermediate image; and
processing the color intermediate image and/or the panchromatic intermediate image to obtain a target image.

2. The image capturing method of claim 1, wherein controlling to expose the 2D pixel array to obtain the panchromatic original image and the color original image comprises:
controlling to expose all panchromatic pixels and all color pixels in the 2D pixel array at a same time;
obtaining the panchromatic original image by outputting pixel values of all panchromatic pixels;
and
obtaining the color original image by outputting pixel values of all color pixels.

3. The image capturing method of claim 1, wherein controlling to expose the 2D pixel array to obtain the panchromatic original image and the color original image comprises:
controlling to expose all panchromatic pixels and all color pixels in the 2D pixel at different times;
obtaining the panchromatic original image by outputting pixel values of all panchromatic pixels;
and
obtaining the color original image by outputting pixel values of all color pixels.

4. The image capturing method of claim 1, wherein in the minimal repeating unit, the panchromatic pixels are arranged in a first diagonal direction, the color pixels are arranged in a second diagonal direction different from the first diagonal direction, and controlling to expose the 2D pixel array to obtain the panchromatic original image and the color original image comprises:
controlling, with a first exposure signal, at least two adjacent panchromatic pixels in the first diagonal direction to expose for a first exposure duration; and
controlling, with a second exposure signal, at least two adjacent color pixels in the second diagonal direction to expose for a second exposure duration.

5. The image capturing method of claim 1, wherein controlling to expose the 2D pixel array to obtain the panchromatic original image and the color original image comprises:
controlling, with a first exposure signal, a first exposure duration for panchromatic pixels in a (2n-1)-th row and a 2n-th row; and
controlling, with a second exposure signal, a second exposure duration for color pixels in the (2n-1)-th row and the 2n-th row, wherein
n is a natural number greater than or equal to 1.

6. The image capturing method of claim 4 or 5, further comprising:
obtaining ambient brightness, wherein the first exposure duration is less than the second exposure duration on condition that the ambient brightness is greater than a brightness threshold.

7. The image capturing method of claim 1, wherein processing the color original image to use all pixels in each sub-unit as the monochromatic large pixel corresponding to the single color in the sub-unit, and outputting the pixel value of the monochromatic large pixel to obtain the color intermediate image comprises:
merging pixel values of all pixels in each sub-unit to obtain a pixel value of the monochromatic large pixel; and
forming the color intermediate image with a first resolution according to pixel values of a plurality of monochromatic large pixels.

8. The image capturing method of claim 7, wherein processing the color intermediate image and/or the panchromatic intermediate image to obtain the target image comprises:
performing interpolation on each monochromatic large pixel in the color intermediate image to obtain pixel values corresponding two colors other than the single color and outputting the pixel values obtained, to obtain a first target image with the first resolution.

9. The image capturing method of claim 7, wherein
processing the panchromatic original image to obtain the panchromatic intermediate image comprises:
processing the panchromatic original image to assign all pixels in each sub-unit as a panchromatic large pixel, and outputting a pixel value of the panchromatic large pixel to obtain the panchromatic intermediate image with the first resolution; and
processing the color intermediate image and/or the panchromatic intermediate image to obtain the target image comprises:
obtaining a chrominance-luminance separated image with the first resolution by separating chrominance and luminance of the color intermediate image;
obtaining a luminance-corrected color image with the first resolution by fusing luminance of the panchromatic intermediate image and luminance of the chrominance-luminance separated image; and
performing interpolation on each monochromatic large pixel in the luminance-corrected color image to obtain pixel values corresponding two colors other than the single color and outputting the pixel values obtained, to obtain a second target image with the first resolution.

10. The image capturing method of claim 9, wherein processing the panchromatic original image to use all pixels in each sub-unit as the panchromatic large pixel, and outputting the pixel value of the panchromatic large pixel to obtain the panchromatic intermediate image comprises:
merging pixel values of all pixels in each sub-unit to obtain a pixel value of the panchromatic large pixel; and
forming the panchromatic intermediate image according to pixel values of a plurality of panchromatic large pixels.

11. The image capturing method of claim 7, wherein processing the color intermediate image and/or the panchromatic intermediate image to obtain the target image comprises:
obtaining a color interpolated image with a second resolution by interpolating the color intermediate image, corresponding sub-units in the color interpolated image being arranged in a Bayer array, the second resolution being greater than the first resolution; and
performing interpolation on all monochromatic pixels in the color interpolated image to obtain pixel values corresponding to two colors other than the single color and outputting the pixel values obtained, to obtain a third target image with the second resolution.

12. The image capturing method of claim 7, wherein
processing the panchromatic original image to obtain the panchromatic intermediate image comprises:
interpolating the panchromatic original image and obtaining pixel values of all pixels in each sub-unit to obtain the panchromatic intermediate image with a second resolution; and
processing the color intermediate image and/or the panchromatic intermediate image to obtain the target image comprises:
obtaining a color interpolated image with the second resolution by interpolating the color intermediate image, corresponding sub-units in the color interpolated image being arranged in a Bayer array, the second resolution being greater than the first resolution;
obtaining a chrominance-luminance separated image with the second resolution by separating chrominance and luminance of the color interpolated image;
obtaining a luminance-corrected color image with the second resolution by fusing luminance of the panchromatic interpolated image and luminance of the chrominance-luminance separated image; and
performing interpolation on all monochromatic pixels in the luminance-corrected color image to obtain pixel values corresponding two colors other than the single color, and outputting the pixel values obtained, to obtain a fourth target image with the second resolution.

13. The image capturing method of any of claims 8-12, wherein the image sensor is applied to a mobile terminal or a camera assembly, and when the mobile terminal or the camera assembly is in different modes, the different modes each correspond to a different target image.

14. The image capturing method of claim 13, wherein
when the mode is a preview mode, the target image is the first target image or the second target image; and
when the mode is an imaging mode, the target image is the second target image, the third target image, or the fourth target image.

15. The image capturing method of claim 13, wherein
when the mode is a preview mode and a low power consumption mode, the target image is the first target image;
when the mode is the preview mode and a non-low power consumption mode, the target image is the second target image;
when the mode is an imaging mode and the low power consumption mode, the target image is the second target image or the third target image; and
when the mode is the imaging mode and the non-low power consumption mode, the target image is the fourth target image.

16. The image capturing method of any of claims 8-12, further comprising:
obtaining ambient brightness, wherein
the target image is the first target image or the third target image on condition that the ambient brightness is greater than a brightness threshold; and
the target image is the second target image or the fourth target image on condition that the ambient brightness is less than the brightness threshold.

17. A camera assembly, comprising:
an image sensor comprising a two-dimensional (2D) pixel array, the 2D pixel array comprising a plurality of panchromatic pixels and a plurality of color pixels, the 2D pixel array comprising minimal repeating units, each minimal repeating unit comprising a plurality of sub-units, each sub-unit comprising a plurality of monochromatic pixels and a plurality of panchromatic pixels, and the image sensor being configured to be exposed to obtain a panchromatic original image and a color original image; and
a processing chip configured to:
process the color original image to use assign pixels in each sub-unit as a monochromatic large pixel corresponding to a single color in the sub-unit, and output a pixel value of the monochromatic large pixel to obtain a color intermediate image;
process the panchromatic original image to obtain a panchromatic intermediate image;
and
process the color intermediate image and/or the panchromatic intermediate image to obtain a target image.

18. The camera assembly of claim 17, wherein all panchromatic pixels and all color pixels in the image sensor are controlled to expose at a same time, and the image sensor is configured to:
output pixel values of all panchromatic pixels to obtain the panchromatic original image; and
output pixel values of all color pixels to obtain the color original image.

19. The camera assembly of claim 17, wherein all panchromatic pixels and all color pixels in the image sensor are controlled to expose at different times, and the image sensor is configured to:
output pixel values of all panchromatic pixels to obtain the panchromatic original image; and
output pixel values of all color pixels to obtain the color original image.

20. The camera assembly of claim 17, wherein in the minimal repeating unit, the panchromatic pixels are arranged in a first diagonal direction, the color pixels are arranged in a second diagonal direction different from the first diagonal direction, and the image sensor is configured to:
control, with a first exposure signal, at least two adjacent panchromatic pixels in the first diagonal direction to expose for a first exposure duration; and
control, with a second exposure signal, at least two adjacent color pixels in the second diagonal direction to expose for a second exposure duration.

21. The camera assembly of claim 17, wherein the image sensor is configured to:
control, with a first exposure signal, a first exposure duration for panchromatic pixels in a (2n-1)-th row and a 2n-th row; and
control, with a second exposure signal, a second exposure duration for color pixels in the (2n-1)-th row and the 2n-th row, wherein
n is a natural number greater than or equal to 1.

22. The camera assembly of claim 20 or 21, wherein the processing chip is further configured to:
obtain ambient brightness, wherein the first exposure duration is less than the second exposure duration on condition that the ambient brightness is greater than a brightness threshold.

23. The camera assembly of claim 22, wherein a ratio of the first exposure duration to the second exposure duration is one of 1:2, 1:3; or 1:4.

24. The camera assembly of claim 20, wherein the image sensor further comprises:
a first exposure control line electrically coupled with control terminals of exposure control circuits in at least two adjacent panchromatic pixels in the first diagonal direction; and
a second exposure control line electrically coupled with control terminals of exposure control circuits in at least two adjacent color pixels in the second diagonal direction, wherein
the first exposure signal is transmitted via the first exposure control line, and the second exposure signal is transmitted via the second exposure control line.

25. The camera assembly of claim 24, wherein
the first exposure control line is W-shaped and electrically coupled with control terminals exposure control circuits in panchromatic pixels in two adjacent lines; and
the second exposure control line is W-shaped and electrically coupled with control terminals of exposure control circuits in color pixels in two adjacent lines.

26. The camera assembly of claim 24 or 25, wherein each pixel further comprises a photoelectric conversion element, wherein the exposure control circuit is electrically coupled with the photoelectric conversion element, and the exposure control circuit is configured to transfer a potential accumulated by the photoelectric conversion element after illumination.

27. The camera assembly of claim 26, wherein the exposure control circuit is a transfer transistor, and the control end of the exposure control circuit is a gate of the transfer transistor.

28. The camera assembly of claim 17, wherein the minimal repeating unit is 16 pixels in 4 rows and 4 columns, and the 16 pixels are arranged as:
W A W B
A W B W
W B W C
B W C W,
wherein W represents a panchromatic pixel, A represents a first color pixel in the plurality of color pixels, B represents a second color pixel in the plurality of color pixels, and C represents a third color pixel in the plurality of color pixels.

29. The camera assembly of claim 17, wherein the minimal repeating unit is 16 pixels in 4 rows and 4 columns, and the 16 pixels are arranged as:
A W B W
W A W B
B W C W
W B W C,
wherein W represents a panchromatic pixel, A represents a first color pixel in the plurality of color pixels, B represents a second color pixel in the plurality of color pixels, and C represents a third color pixel in the plurality of color pixels.

30. The camera assembly of claim 17, wherein the minimal repeating unit is 36 pixels in 6 rows and 6 columns, and the 36 pixels are arranged as:
W A W B W B
A W A W B W
W A W B W B
B W B W C W
W B W C W C
B W B W C W,
wherein W represents a panchromatic pixel, A represents a first color pixel in the plurality of color pixels, B represents a second color pixel in the plurality of color pixels, and C represents a third color pixel in the plurality of color pixels.

31. The camera assembly of claim 17, wherein the minimal repeating unit is 36 pixels in 6 rows and 6 columns, and the 36 pixels are arranged as:
A W A W B W
W A W B W B
A W A W B W
W B W C W C
B W B W C W
W B W C W C,
wherein W represents a panchromatic pixel, A represents a first color pixel in the plurality of color pixels, B represents a second color pixel in the plurality of color pixels, and C represents a third color pixel in the plurality of color pixels.

32. The camera assembly of claim 17, wherein the minimal repeating unit is 64 pixels in 8 rows and 8 columns, and the 64 pixels are arranged as:
W A W A W B W B
A W A W B W B W
W A W A W B W B
A W A W B W B W
W B W B W C W C
B W B W C W C W
W B W B W C W C
B W B W C W C W,
wherein W represents a panchromatic pixel, A represents a first color pixel in the plurality of color pixels, B represents a second color pixel in the plurality of color pixels, and C represents a third color pixel in the plurality of color pixels.

33. The camera assembly of claim 17, wherein the minimal repeating unit is 64 pixels in 8 rows and 8 columns, and the 64 pixels are arranged as
A W A W B W B W
W A W A W B W B
A W A W B W B W
W A W A W B W B
B W B W C W C W
W B W B W C W C
B W B W C W C W
W B W B W C W C,
wherein W represents a panchromatic pixel, A represents a first color pixel in the plurality of color pixels, B represents a second color pixel in the plurality of color pixels, and C represents a third color pixel in the plurality of color pixels.

34. The camera assembly of any of claims 28-33, wherein
the first color pixel A is a red pixel R;
the second color pixel B is a green pixel G; and
the third color pixel C is a blue pixel Bu.

35. The camera assembly of any of claims 28-33, wherein
the first color pixel A is a red pixel R;
the second color pixel B is a yellow pixel Y; and
the third color pixel C is a blue pixel Bu.

36. The camera assembly of any of claims 28-33, wherein
the first color pixel A is a magenta pixel M;
the second color pixel B is a cyan pixel Cy; and
the third color pixel C is a yellow pixel Y.

37. The camera assembly of any of claims 17 and 28-33, wherein a response waveband of the panchromatic pixel is a visible band.

38. The camera assembly of any of claims 17 and 28-33, wherein a response waveband of the panchromatic pixel is a visible band and a near infrared band and is matched with a response band of a photoelectric conversion element in the image sensor.

39. The camera assembly of claim 17, wherein the processing chip is further configured to:
merge pixel values of all pixels in each sub-unit to obtain a pixel value of the monochromatic large pixel; and
form the color intermediate image with a first resolution according to pixel values of a plurality of monochromatic large pixels.

40. The camera assembly of claim 39, wherein the processing chip is further configured to:
perform interpolation on each monochromatic large pixel in the color intermediate image to obtain pixel values corresponding two colors other than the single color and output the pixel values obtained, to obtain a first target image with the first resolution.

41. The camera assembly of claim 39, wherein the processing chip is further configured to:
process the panchromatic original image to assign all pixels in each sub-unit as a panchromatic large pixel, and output a pixel value of the panchromatic large pixel to obtain the panchromatic intermediate image with the first resolution;
obtain a chrominance-luminance separated image with the first resolution by separating chrominance and luminance of the color intermediate image to;
obtain a luminance-corrected color image with the first resolution by fusing luminance of the panchromatic intermediate image and luminance of the chrominance-luminance separated image; and
perform interpolation on each monochromatic large pixel in the luminance-corrected color image to obtain pixel values corresponding two colors other than the single color and output the pixel values obtained, to obtain a second target image with the first resolution.

42. The camera assembly of claim 41, wherein the processing chip is further configured to:
merge pixel values of all pixels in each sub-unit to obtain a pixel value of the panchromatic large pixel; and
form the panchromatic intermediate image according to pixel values of a plurality of panchromatic large pixels.

43. The camera assembly of claim 39, wherein the processing chip is further configured to:
interpolate the color intermediate image to obtain a color interpolated image with a second resolution, corresponding sub-units in the color interpolated image being arranged in a Bayer array, the second resolution being greater than the first resolution; and
perform interpolation on all monochromatic pixels in the color interpolated image to obtain pixel values corresponding to two colors other than the single color and output the pixel values obtained, to obtain a third target image with the second resolution.

44. The camera assembly of claim 39, wherein the processing chip is further configured to:
interpolate the panchromatic original image and obtain pixel values of all pixels in each sub-unit to obtain the panchromatic intermediate image with a second resolution;
obtain a color interpolated image with the second resolution by interpolating the color intermediate image, corresponding sub-units in the color interpolated image being arranged in a Bayer array, the second resolution being greater than the first resolution;
obtain a chrominance-luminance separated image with the second resolution by separating chrominance and luminance of the color interpolated image to;
obtain a luminance-corrected color image with the second resolution by fusing luminance of the panchromatic interpolated image and luminance of the chrominance-luminance separated image to; and
perform interpolation on all monochromatic pixels in the luminance-corrected color image to obtain pixel values corresponding two colors other than the single color, and output the pixel values obtained, to obtain a fourth target image with the second resolution.

45. The camera assembly of any of claims 40-44, wherein the image sensor is applied to the camera assembly, and when the camera assembly is in different modes, the different modes each correspond to a different target image.

46. The camera assembly of claim 45, wherein
when the mode is a preview mode, the target image is the first target image or the second target image; and
when the mode is an imaging mode, the target image is the second target image, the third target image, or the fourth target image.

47. The camera assembly of claim 45, wherein
when the mode is a preview mode and a low power consumption mode, the target image is the first target image;
when the mode is the preview mode and a non-low power consumption mode, the target image is the second target image;
when the mode is an imaging mode and the low power consumption mode, the target image is the second target image or the third target image; and
when the mode is the imaging mode and the non-low power consumption mode, the target image is the fourth target image.

48. The camera assembly of any of claims 40-44, wherein the processing chip is further configured to obtain ambient brightness, wherein
the target image is the first target image or the third target image on condition that the ambient brightness is greater than a brightness threshold; and
the target image is the second target image or the fourth target image on condition that the ambient brightness is less than the brightness threshold.

49. A mobile terminal, comprising:
an image sensor comprising a two-dimensional (2D) pixel array, the 2D pixel array comprising a plurality of panchromatic pixels and a plurality of color pixels, the 2D pixel array comprising minimal repeating units, each minimal repeating unit comprising a plurality of sub-units, each sub-unit comprising a plurality of monochromatic pixels and a plurality of panchromatic pixels, and the image sensor being configured to be exposed to obtain a panchromatic original image and a color original image; and
a processor configured to:
process the color original image to assign all pixels in each sub-unit as a monochromatic large pixel corresponding to a single color in the sub-unit, and output a pixel value of the monochromatic large pixel to obtain a color intermediate image;
process the panchromatic original image to obtain a panchromatic intermediate image;
and
process the color intermediate image and/or the panchromatic intermediate image to obtain a target image.

50. The mobile terminal of claim 49, wherein all panchromatic pixels and all color pixels in the image sensor are controlled to expose at a same time, and the image sensor is configured to:
output pixel values of all panchromatic pixels to obtain the panchromatic original image; and
output pixel values of all color pixels to obtain the color original image.

51. The mobile terminal of claim 49, wherein all panchromatic pixels and all color pixels in the image sensor are controlled to expose at different times, and the image sensor is configured to:
output pixel values of all panchromatic pixels to obtain the panchromatic original image; and
output pixel values of all color pixels to obtain the color original image.

52. The mobile terminal of claim 49, wherein in the minimal repeating unit, the panchromatic pixels are arranged in a first diagonal direction, the color pixels are arranged in a second diagonal direction different from the first diagonal direction, and the image sensor is configured to:
control, with a first exposure signal, at least two adjacent panchromatic pixels in the first diagonal direction to expose for a first exposure duration; and
control, with a second exposure signal, at least two adjacent color pixels in the second diagonal direction to expose for a second exposure duration.

53. The mobile terminal of claim 49, wherein the image sensor is configured to:
control, with a first exposure signal, a first exposure duration for panchromatic pixels in a (2n-1)-th row and a 2n-th row; and
control, with a second exposure signal, a second exposure duration for color pixels in the (2n-1)-th row and the 2n-th row, wherein
n is a natural number greater than or equal to 1.

54. The mobile terminal of claim 52 or 53, wherein the processor is further configured to:
obtain ambient brightness, wherein the first exposure duration is less than the second exposure duration on condition that the ambient brightness is greater than a brightness threshold.

55. The mobile terminal of claim 54, wherein a ratio of the first exposure duration to the second exposure duration is one of 1:2, 1:3; or 1:4.

56. The mobile terminal of claim 52, wherein the image sensor further comprises:
a first exposure control line electrically coupled with control terminals of exposure control circuits in at least two adjacent panchromatic pixels in the first diagonal direction; and
a second exposure control line electrically coupled with control terminals of exposure control circuits in at least two adjacent color pixels in the second diagonal direction, wherein
the first exposure signal is transmitted via the first exposure control line, and the second exposure signal is transmitted via the second exposure control line.

57. The mobile terminal of claim 56, wherein
the first exposure control line is W-shaped and electrically coupled with control terminals of exposure control circuits in panchromatic pixels in two adjacent lines; and
the second exposure control line is W-shaped and electrically coupled with control terminals of exposure control circuits in color pixels in two adjacent lines.

58. The mobile terminal of claim 56 or 57, wherein each pixel further comprises a photoelectric conversion element, wherein the exposure control circuit is electrically coupled with the photoelectric conversion element, and the exposure control circuit is configured to transfer a potential accumulated by the photoelectric conversion element after illumination.

59. The mobile terminal of claim 58, wherein the exposure control circuit is a transfer transistor, and the control end of the exposure control circuit is a gate of the transfer transistor.

60. The mobile terminal of claim 49, wherein the minimal repeating unit is 16 pixels in 4 rows and 4 columns, and the 16 pixels are arranged as:
W A W B
A W B W
W B W C
B W C W,
wherein W represents a panchromatic pixel, A represents a first color pixel in the plurality of color pixels, B represents a second color pixel in the plurality of color pixels, and C represents a third color pixel in the plurality of color pixels.

61. The mobile terminal of claim 49, wherein the minimal repeating unit is 16 pixels in 4 rows and 4 columns, and the 16 pixels are arranged as:
A W B W
W A W B
B W C W
W B W C,
wherein W represents a panchromatic pixel, A represents a first color pixel in the plurality of color pixels, B represents a second color pixel in the plurality of color pixels, and C represents a third color pixel in the plurality of color pixels.

62. The mobile terminal of claim 49, wherein the minimal repeating unit is 36 pixels in 6 rows and 6 columns, and the 36 pixels are arranged as:
W A W B W B
A W A W B W
W A W B W B
B W B W C W
W B W C W C
B W B W C W,
wherein W represents a panchromatic pixel, A represents a first color pixel in the plurality of color pixels, B represents a second color pixel in the plurality of color pixels, and C represents a third color pixel in the plurality of color pixels.

63. The mobile terminal of claim 49, wherein the minimal repeating unit is 36 pixels in 6 rows and 6 columns, and the 36 pixels are arranged as:
A W A W B W
W A W B W B
A W A W B W
W B W C W C
B W B W C W
W B W C W C,
wherein W represents a panchromatic pixel, A represents a first color pixel in the plurality of color pixels, B represents a second color pixel in the plurality of color pixels, and C represents a third color pixel in the plurality of color pixels.

64. The mobile terminal of claim 49, wherein the minimal repeating unit is 64 pixels in 8 rows and 8 columns, and the 64 pixels are arranged as:
WAWAWBWB
AWAWBWBW
WAWAWBWB
AWAWBWBW
WBWBWCWC
BWBWCWCW
WBWBWCWC
BWBWCWCW,
wherein W represents a panchromatic pixel, A represents a first color pixel in the plurality of color pixels, B represents a second color pixel in the plurality of color pixels, and C represents a third color pixel in the plurality of color pixels.

65. The mobile terminal of claim 49, wherein the minimal repeating unit is 64 pixels in 8 rows and 8 columns, and the 64 pixels are arranged as:
AWAWBWBW
WAWAWBWB
AWAWBWBW
WAWAWBWB
BWBWCWCW
WBWBWCWC
BWBWCWCW
WBWBWCWC,
wherein W represents a panchromatic pixel, A represents a first color pixel in the plurality of color pixels, B represents a second color pixel in the plurality of color pixels, and C represents a third color pixel in the plurality of color pixels.

66. The mobile terminal of any of claims 60-65, wherein
the first color pixel A is a red pixel R;
the second color pixel B is a green pixel G; and
the third color pixel C is a blue pixel Bu.

67. The mobile terminal of any of claims 60-65, wherein
the first color pixel A is a red pixel R;
the second color pixel B is a yellow pixel Y; and
the third color pixel C is a blue pixel Bu.

68. The mobile terminal of any of claims 60-65, wherein
the first color pixel A is a magenta pixel M;
the second color pixel B is a cyan pixel Cy; and
the third color pixel C is a yellow pixel Y.

69. The mobile terminal of any of claims 49 and 60-65, wherein a response waveband of the panchromatic pixel is a visible band.

70. The mobile terminal of any of claims 49 and 60-65, wherein a response waveband of the panchromatic pixel is a visible band and a near infrared band and is matched with a response band of a photoelectric conversion element in the image sensor.

71. The mobile terminal of claim 49, wherein the processor is further configured to:
merge pixel values of all pixels in each sub-unit to obtain a pixel value of the monochromatic large pixel; and
form the color intermediate image with a first resolution according to pixel values of a plurality of monochromatic large pixels.

72. The mobile terminal of claim 71, wherein the processor is further configured to:
perform interpolation on each monochromatic large pixel in the color intermediate image to obtain pixel values corresponding two colors other than the single color, and output the pixel values obtained, to obtain a first target image with the first resolution.

73. The mobile terminal of claim 71, wherein the processor is further configured to:
process the panchromatic original image to assign all pixels in each sub-unit as a panchromatic large pixel, and output a pixel value of the panchromatic large pixel to obtain the panchromatic intermediate image with the first resolution;
separate chrominance and luminance of the color intermediate image to obtain a chrominance-luminance separated image with the first resolution;
fuse luminance of the panchromatic intermediate image and luminance of the chrominance-luminance separated image to obtain a luminance-corrected color image with the first resolution; and
perform interpolation on each monochromatic large pixel in the luminance-corrected color image to obtain pixel values corresponding two colors other than the single color and output the pixel values obtained, to obtain a second target image with the first resolution.

74. The mobile terminal of claim 73, wherein the processor is further configured to:
merge pixel values of all pixels in each sub-unit to obtain a pixel value of the panchromatic large pixel; and
form the panchromatic intermediate image according to pixel values of a plurality of panchromatic large pixels.

75. The mobile terminal of claim 71, wherein the processor is further configured to:
interpolate the color intermediate image to obtain a color interpolated image with a second resolution, corresponding sub-units in the color interpolated image being arranged in a Bayer array, the second resolution being greater than the first resolution; and
perform interpolation on all monochromatic pixels in the color interpolated image to obtain pixel values corresponding to two colors other than the single color, and output the pixel values obtained, to obtain a third target image with the second resolution.

76. The mobile terminal of claim 71, wherein the processor is further configured to:
interpolate the panchromatic original image and obtain pixel values of all pixels in each sub-unit to obtain the panchromatic intermediate image with a second resolution;
interpolate the color intermediate image to obtain a color interpolated image with the second resolution, corresponding sub-units in the color interpolated image being arranged in a Bayer array, the second resolution being greater than the first resolution;
separate chrominance and luminance of the color interpolated image to obtain a chrominance-luminance separated image with the second resolution;
fuse luminance of the panchromatic interpolated image and luminance of the chrominance-luminance separated image to obtain a luminance-corrected color image with the second resolution; and
perform interpolation on all monochromatic pixels in the luminance-corrected color image to obtain pixel values corresponding two colors other than the single color, and output the pixel values obtained, to obtain a fourth target image with the second resolution.

77. The mobile terminal of any of claims 72-75, wherein the image sensor is applied to the mobile terminal, and when the mobile terminal is in different modes, the different modes each correspond to a different target image.

78. The mobile terminal of claim 77, wherein
when the mode is a preview mode, the target image is the first target image or the second target image; and
when the mode is an imaging mode, the target image is the second target image, the third target image, or the fourth target image.

79. The mobile terminal of claim 77, wherein
when the mode is a preview mode and a low power consumption mode, the target image is the first target image;
when the mode is the preview mode and a non-low power consumption mode, the target image is the second target image;
when the mode is an imaging mode and the low power consumption mode, the target image is the second target image or the third target image; and
when the mode is the imaging mode and the non-low power consumption mode, the target image is the fourth target image.

80. The mobile terminal of any of claims 72-75, wherein the processing chip is further configured to obtain ambient brightness, wherein
the target image is the first target image or the third target image on condition that the ambient brightness is greater than a brightness threshold; and the target image is the second target image or the fourth target image on condition that the ambient brightness is less than the brightness threshold.
